(19) Europäisches Patentamt
European Patent Office
Office européen des brevets

(11) **EP 4 742 299 A1**

(12) **EUROPEAN PATENT APPLICATION**

(43) Date of publication:
**13.05.2026 Bulletin 2026/20**

(21) Application number: **25213938.1**

(22) Date of filing: **06.11.2025**

(51) International Patent Classification (IPC):
**H01J 49/42** $^{(2006.01)}$   **G01N 27/622** $^{(2021.01)}$

(52) Cooperative Patent Classification (CPC):
**H01J 49/4235; G01N 27/622**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.11.2024 US 202463716846 P**

(71) Applicant: **THERMO FINNIGAN LLC**
**San Jose CA 95134 (US)**

(72) Inventors:
• **SENKO, Michael W.**
  **Sunnyvale (US)**
• **GOODWIN, Michael P.**
  **Santa Clara (US)**

(74) Representative: **Boult Wade Tennant LLP**
**Salisbury Square House**
**8 Salisbury Square**
**London EC4Y 8AP (GB)**

(54) **ION GUIDE WITH SWITCHABLE OPERATION MODES**

(57)   An ion guide includes a series of electrodes disposed between first and second ends of the ion guide. A controller is configured to determine that the ion guide is to operate in a mass-to-charge ratio (m/z) separation mode to separate ions primarily based on m/z of the ions or an ion mobility separation mode to separate ions primarily based on a mobility of the ions. The controller is further configured to set an attribute of radio-frequency (RF) voltage waveforms that are to be applied to the series of electrodes and to cause the RF voltage waveforms to be applied while the ion guide operates in the select mode. The RF voltage waveforms cause spatial separation of the ions within the ion guide and generate a plurality of moving pseudopotential wells that exert forces that urge the ions to migrate towards the second end of the ion guide.

Fig. 1A
(Prior Art)

EP 4 742 299 A1

**Description**

BACKGROUND INFORMATION

Mass spectrometry has often been referred to as a "Gold Standard" tool for the identification and analysis of various classes of compounds. In no small measure, the power of mass spectrometry resides in the ability of modern mass spectrometers to separately isolate, store, and subsequently manipulate - via ion fragmentation or ion-ion chemical reaction - specific ion species of interest that are chosen from among the multitude of ion species that are generally produced by ionization of any sample mixture. In many types of mass spectrometers, quadrupole mass filters are often employed to perform the ion isolation function. For example, in a mass spectrometer of the triple-quadrupole type or of the quadrupole-time-of-flight (Q-TOF) type, a mass filter is disposed upstream from a mass analyzer. The mass filter may receive a stream of ions composed of a variety of ion species comprising a variety of mass-to-charge (m/z) ratios. To isolate a particular ion species comprising a specific *m/z*, a specific pair of direct-current (DC) and oscillatory radio-frequency (RF) voltages may be applied to rod electrodes of the mass filter. The application of DC and RF voltages of the appropriate magnitude permits transmission, through the mass filter, of only a narrow range of *m/z* values that encompasses the specific *m/z* of interest. Under such operation, ions having all other *m/z* values are ejected from the apparatus and neutralized. The ion species that comprises the specific *m/z* that is of interest is thus transmitted, without significant contamination from other ion species, through the mass filter to other, downstream mass spectrometer components that may manipulate and analyze ions of the isolated ion species in various ways.

Although mass filters perform an important function, they are nonetheless inefficient in that, at any one time, they cause the elimination of all ions except for those specific ions that are permitted to pass through the apparatus by the choice of filter passband. As a result, typically more than ninety percent of potentially available compositionally relevant information may be wasted by the mass filter at any particular time.

To improve overall analytical efficiency, various types of pre-separation apparatuses have been employed, generally upstream from a mass filter, as a means of providing non-destructive initial coarse separation of ion species. Once separated by the pre-separation apparatus, the various coarsely separated groups of ions may then be separately transferred to a mass filter for narrow-band isolation of ion species of interest. Because of the earlier pre-separation, a lesser proportion of ions will be discarded by the mass filter during each such isolation.

As one example of such a pre-separation method, ion mobility spectrometry (IMS) is often used to separate ionized molecules in the gas phase based on their mobility in a carrier buffer gas. The reader is referred to Kanu et al. (Kanu, Abu B., Prabha Dwivedi, Maggie Tam, Laura Matz, and Herbert H. Hill Jr. "Ion mobility-mass spectrometry." Journal of mass spectrometry 43, no. 1 (2008): 1-22.) for a general review of coupling of ion mobility spectrometers to mass spectrometers. According to another separation method, which is known as trapped ion mobility spectrometry (TIMS), ions are trapped along a non-uniform electric DC field (field gradient) by a counteracting gas flow or along a uniform electric DC field by a counteracting gas flow which has a non-uniform axial velocity profile (gas velocity gradient). The trapped ions are separated in space according to ion mobility and subsequently eluted (released) over time according to their mobility by adjusting one of the gas velocity and the DC electric field. The details of the TIMS technique are described, for example, in U.S. Pat. No. 6,630,662 in the name of inventor Loboda; U.S. Pat. No. 7,838,826 B1 in the name of inventor Park; and U.S. Patent No. 11,226,308 in the names of Rather and Michelmann. Additional descriptions are provided in Michelmann et al. (Michelmann, Karsten, Joshua A. Silveira, Mark E. Ridgeway, and Melvin A. Park. "Fundamentals of trapped ion mobility spectrometry." Journal of the American Society for Mass Spectrometry 26, no. 1 (2014): 14-24.) as well as in Silveira et al. (Silveira, Joshua A., Karsten Michelmann, Mark E. Ridgeway, and Melvin A. Park. "Fundamentals of trapped ion mobility spectrometry part II: fluid dynamics." Journal of the American Society for Mass Spectrometry 27, no. 4 (2016): 585-595.)

Both the ion mobility spectrometry technique and the trapped ion mobility spectrometry technique make use of ion guides that are configured to provide an axial DC field along their length. Such axial fields may be provided by proportioning a voltage that is applied between entrance and exit ends of the ion guide among a plurality of electrodes that are disposed between the entrance and exit ends of the ion guide. As one example, the voltage may be proportioned among segments of the rod electrodes of a quadrupole or multipole ion guide apparatus. Alternatively, as discussed in greater detail later in this document, the voltage may be proportioned, for example, among a plurality of mutually parallel electrode plates or among a plurality of thin electrode wires deposited on or otherwise adhered to a substrate plate or wafer.

With the provision of appropriate power supplies and electrical connections, the various rod segments of a segmented quadrupole ion guide, plate electrodes of a stacked plate or stacked ring ion guide, or electrode wires of a printed circuit board may be provided with so-called "travelling-wave" DC voltages (U.S. Pat. No. 6,812,453 in the names of inventors Bateman et al). Generally, in such operation, periodically varying DC voltages are applied to the individual rod segment electrodes, plate electrodes, or wires, the phase of the periodicity being shifted between pairs of electrodes such that electrical potential wells are caused to migrate from an ion guide's ion inlet end to its ion outlet end. Travelling DC voltage waves have been used to control ions in mass spectrometers in accordance with several different configurations. The most common commercially-available ion guides and mass spectrometer collision cells that employ DC travelling waves are the T-Wave™ systems that are provided by Waters Corporation of Milford, Massachusetts, USA. The T-Wave™ systems employ stacked ring ion guides, with radial confinement of ions provided by RF voltages and axial ion propulsion provided by a summed DC travelling wave. Other DC travelling wave configurations known by the acronym "SLIM" (Structures for Lossless Ion Manipulation) have been developed at Pacific Northwest National Laboratory and are described in Tolmachev et al. (Tolmachev, Aleksey V., Ian K. Webb, Yehia M. Ibrahim, Sandilya VB Garimella, Xinyu Zhang, Gordon A. Anderson, and Richard D. Smith. "Characterization of ion dynamics in structures for lossless ion manipulations." Analytical chemistry 86, no. 18 (2014): 9162-9168.) as well as in Ibrahim et al. (Ibrahim, Yehia M., Ahmed M. Hamid, Liulin Deng, Sandilya VB Garimella, Ian K. Webb, Erin S. Baker, and Richard D. Smith. "New frontiers for mass spectrometry based upon structures for lossless ion manipulations." Analyst 142, no. 7 (2017): 1010-1021.). The SLIM ion guides employ similar travelling wave concepts to trap and propel ions, but do so using modified electrode configurations that are amenable to printed circuit board implementation. The T-Wave™ and SLIM travelling wave systems are most commonly used at relatively high pressures (e.g., approximately 1 Torr), where the axial motion of ions is impeded by gas collisions, such that separation is possible based partially on collisional cross section.

Recently, there have been descriptions of ion guides in which travelling waves are implemented not by DC voltages but, instead, by the manipulation of the main RF axial-confinement waveform(s) that are applied to multipole rod segments or to plate electrodes of stacked ring structures. According to these teachings, the various electrodes of an electrode array (e.g., an array of plate electrodes, rod-electrode segments, printed-circuit-board electrodes, etc.) may be logically grouped into consecutive subsets of electrodes (e.g., sets comprising three or more electrodes each) whereby, within each subset, a differently modulated RF waveform is applied to each electrode of the subset. Examples include RF travelling waves created via amplitude modulation (U.S. Pat. No. 9,799,503 in the names of inventors Williams et al.) and frequency modulation (U.S. Pat. No. 10,692,710 in the names of inventors Prabhakaran et al.).

SUMMARY

The following description presents a simplified summary of one or more aspects of the systems and methods described herein. This summary is not an extensive overview of all contemplated aspects and is intended to neither identify key or critical elements of all aspects nor delineate the scope of any or all aspects. Its sole purpose is to present one or more aspects of the systems and methods described herein as a prelude to the detailed description that is presented below.

An illustrative system comprises a memory storing instructions and one or more processors communicatively coupled to the memory and configured to execute the instructions to perform a process comprising: determining that an ion guide is to operate in a select mode of two modes, the ion guide comprising a first end, a second end, and a series of electrodes disposed between the first end and the second end, the series of electrodes defining an ion occupation volume between the first end and the second end, wherein the two modes include a mass-to-charge ratio ($m/z$) separation mode configured to separate ions within the ion occupation volume primarily based on $m/z$ of the ions and an ion mobility separation mode configured to separate the ions within the ion occupation volume primarily based on a mobility of the ions; setting, based on the determining, an attribute of radio-frequency (RF) voltage waveforms that are to be applied to the series of electrodes to operate the ion guide in the select mode, wherein the setting comprises: setting the attribute of the RF voltage waveforms to be within a first range when the ion guide is to operate in the $m/z$ separation mode, and setting the attribute of the RF voltage waveforms to be within a second range when the ion guide is to operate in the ion mobility separation mode; and causing the RF voltage waveforms having the set attribute to be applied to the series of electrodes while the ion guide operates in the select mode, the RF voltage waveforms configured to cause spatial separation of the ions within the ion guide and to generate a plurality of moving pseudopotential wells that exert forces that urge the ions to migrate towards the second end of the ion guide.

An illustrative mass spectrometer system comprises an ion guide configured to receive ions and comprising: a first end; a second end; and a series of electrodes disposed between the first end and the second end, the series of electrodes defining an ion occupation volume between the first end and the second end; one or more power supplies electrically coupled to the series of electrodes, the one or more power supplies configured to apply a set of radio-frequency (RF) voltage waveforms to the series of electrodes; and a controller communicatively coupled with the one or more power supplies and configured to perform a process comprising: determining that the ion guide is to operate in a select mode of two modes, the two modes including a mass-to-charge ratio ($m/z$) separation mode configured to separate ions within the ion occupation volume primarily based on $m/z$ of the ions and an ion mobility separation mode configured to separate the ions primarily based on a mobility of the ions; setting, based on the determining, an attribute of radio-frequency (RF) voltage waveforms that are to be applied to the series of electrodes to operate the ion guide in the select mode, wherein the setting comprises: setting the attribute of the RF voltage waveforms to be within a first range when the ion guide is to operate in the $m/z$ separation mode, and setting the attribute of the RF voltage waveforms to be within a second range when the ion guide is to operate in the ion mobility separation mode; and causing the RF voltage waveforms having the set attribute to be applied to the series of electrodes while the ion guide operates in the select mode, the RF voltage waveforms configured to cause spatial separation of the ions within the ion guide and to generate a plurality of moving pseudopotential wells that exert forces that urge the ions to migrate towards the second end of the ion guide.

An illustrative method of operating an ion guide comprising a first end, a second end, and a series of electrodes disposed between the first end and the second end, the series of electrodes defining an ion occupation volume between the first end and the second end, the method comprising: determining that the ion guide is to operate in a select mode of two modes, the two modes including a mass-to-charge ratio (m/z) separation mode configured to separate ions within the ion occupation volume primarily based on *m/z* of the ions and an ion mobility separation mode configured to separate the ions primarily based on a mobility of the ions; setting, based on the determining, an attribute of radio-frequency (RF) voltage waveforms that are to be applied to the series of electrodes to operate the ion guide in the select mode, wherein the setting comprises: setting the attribute of the RF voltage waveforms to be within a first range when the ion guide is to operate in the *m/z* separation mode, and setting the attribute of the RF voltage waveforms to be within a second range when the ion guide is to operate in the ion mobility separation mode; and causing the RF voltage waveforms having the set attribute to be applied to the series of electrodes while the ion guide operates in the select mode, the RF voltage waveforms configured to cause spatial separation of the ions within the ion guide and to generate a plurality of moving pseudopotential wells that exert forces that urge the ions to migrate towards the second end of the ion guide.

BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.

Fig. 1A is a schematic cross-sectional depiction of a known stacked-ring ion guide ion transport apparatus.

Fig. 1B is a schematic depiction of an exemplary plate electrode as may be employed in a stacked-ring ion guide ion transport apparatus.

Fig. 1C is a schematic depiction of a known ion manipulation and ion guiding device that may be employed as an ion transport apparatus.

Fig. 1D is a schematic depiction of an electrode configuration of a surface of the known ion manipulation and ion guiding device of Fig. 1C.

Fig. 2A is a schematic cross-sectional depiction of an embodiment of an ion tunnel stacked-ring ion guide in accordance with the present teachings, wherein the directions of ion migration are caused to differ for different mass-to-charge (*m/z*) ratios by application of a static, uniform DC axial field that is in opposition to the downstream migration of pseudopotential wells produced by application of travelling Radio-Frequency (RF) waves.

Fig. 2B is another schematic cross-sectional depiction of the ion tunnel stacked-ring ion guide of Fig. 2A, wherein ions are caused to migrate to and accumulate within various different stability zones in accordance with their respective mass-to-charge (m/z) ratios by application of a static, non-uniform DC axial field that is in opposition to the downstream migration of the pseudopotential wells.

Fig. 2C is a schematic depiction of the extraction of ions from the stacked-ring ion guide apparatus of Fig. 2A, in order their respective *m/z* ratios, by ramping an amplitude (or amplitudes) of RF voltages applied to electrodes of the apparatus.

Fig. 3A is a schematic cross-sectional depiction of a first embodiment of an ion funnel stacked-ring ion guide in accordance with the present teachings, wherein the directions of ion migration are caused to differ for different mass-to-charge (m/z) ratios by application of a static, uniform DC axial field that pulls ions towards the downstream, narrow end of the funnel and that is in opposition to the upstream migration of pseudopotential wells produced by application of travelling RF waves.

Fig. 3B is a modified version, in accordance with the present teachings, of the ion manipulation and ion guiding device of Fig. 1C.

Fig. 4A is a set of simulated plots of the equilibrium positions of ions of various *m/z* ratios within an ion guide ion separator apparatus under application of a gradient of a DC axial field, the direction of which opposes the direction of RF-generated travelling waves.

Fig. 4B is a set of simulated plots of the equilibrium positions of ions of various *m/z* ratios within an ion guide ion separator apparatus under application of a gradient in the amplitude of travelling-wave-inducing RF waveforms in the presence of an opposing uniform DC axial field.

Fig. 5 is a schematic depiction of a portion of a mass spectrometer apparatus that includes a quadrupole mass filter or other mass spectrometer component arranged in series with an ion optical apparatus that is configured and operated in accordance with the present teachings.

Fig. 6A is a reproduction of the schematic cross-sectional depiction of the apparatus of Fig. 2A and of the ion packets therein, further showing a schematic example of how DC voltages may be apportioned among stacked electrodes to generate a static, uniform DC axial field.

Fig. 6B is a schematic plot of the application, in accordance with some embodiments of the present teachings, of a gradient of the magnitude of the uniform axial electric field, $\vec{E}$, in opposition to the urging of ions by movement of RF-generated travelling pseudo-potential wells (pseudo-waves).

Fig. 6C is a schematic plot of a profile of the magnitudes of DC voltages, V, applied to a series of electrodes within an ion guide or ion separator apparatus that may be used to generate the axial electric field profile of Fig. 6B.

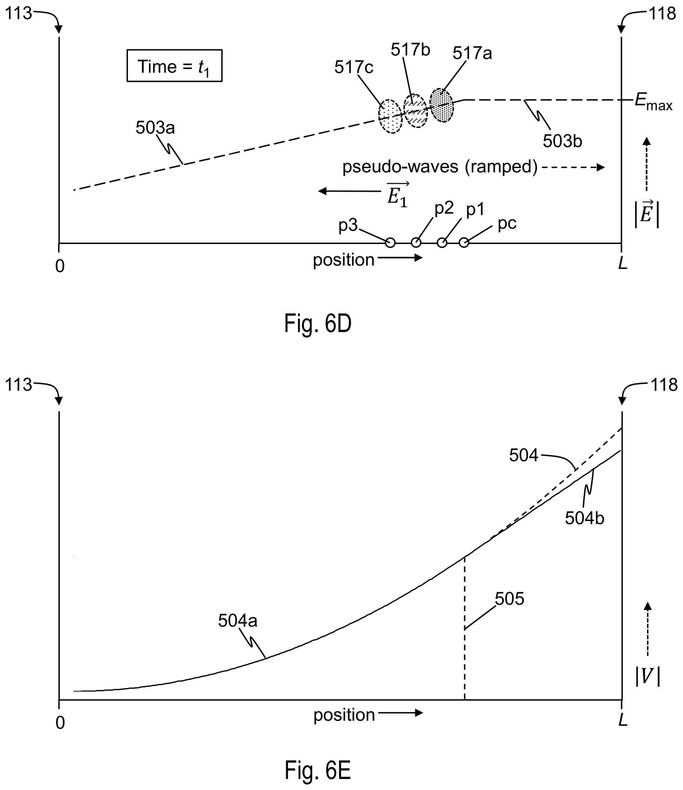

Fig. 6D is a schematic plot of the application, in accordance with some other embodiments of the present teachings, of an axial electric field, $\vec{E}$, that is in opposition to the urging of ions by movement of RF-generated travelling pseudo-waves, wherein the magnitude of the electric field increases along a direction towards an ion outlet in a first portion of an ion guide or ion separator apparatus and is constant in a second portion of the ion guide or ion separator apparatus, the plot also schematically depicting the positions, within the apparatus, of packets of ions having different respective mass-to-charge ratios at a first time, $t_1$, at which an applied amplitude of pseudopotential wells is at a first value.

Fig. 6E is a schematic plot of a profile of the magnitudes of DC voltages, V, applied to a series of electrodes within an ion guide or ion separator apparatus that may be used to generate the axial electric field profile of Fig. 6D.

Fig. 6F is a schematic depiction of the positions of the packets of ions of Fig. 6D at a second time, $t_2$, at which an applied amplitude of pseudopotential wells is at a second value that is greater than the first applied amplitude value.

Fig. 6G is a schematic depiction of the positions of the packets of ions of Fig. 6D and Fig. 6F at a third time, $t_3$, at which the applied amplitude of the pseudopotential wells is at a third value that is greater than the second applied amplitude value.

Fig. 6H is a schematic plot of the application, in accordance with some embodiments of the present teachings, of an axial electric field, $\vec{E}$, that is in opposition to the urging of ions by movement of RF-generated travelling pseudo-waves, wherein the magnitude of the electric field increases at a first rate along a direction towards an ion outlet in a first portion of an ion guide or ion separator apparatus and increases at a second, lesser rate in the same direction in a second portion of the ion guide or ion separator apparatus.

Fig. 7A is a schematic plot of a first method of ramping of an RF amplitude that is applied to electrodes of ion guides in accordance with the present teachings.

Fig. 7B is a schematic plot of a second method of ramping of an RF amplitude that is applied to electrodes of ion guides in accordance with the present teachings.

Fig. 8 is a plot of the mass spectral resolution of ions emerging from an ion guide or ion separator apparatus in which a DC electric field profile of the type shown in Fig. 6D is employed while an amplitude of an opposing set of RF-generated pseudo-waves is increased over time in accordance with the present teachings.

Fig. 9 is a plot of the variation, versus mass-to-charge ratio, of mass spectral resolution of ions emerging from an ion guide or ion separator apparatus versus total time allotted for ramping an amplitude of an opposing set of RF-generated pseudo-waves in accordance with the present teachings, wherein a DC electric field profile of the type shown in Fig. 6D is employed.

Fig. 10A is a flow diagram of a first method of operating an ion guide in accordance with the present teachings.

Fig. 10B is a flow diagram of a second method of operating an ion guide in accordance with the present teachings.

Fig. 10C is a flow diagram of a third method of operating an ion guide in accordance with the present teachings.

Fig. 11A is a schematic depiction of an example voltage profile and resultant electric field vector magnitudes as may be applied to an ion guide apparatus in accordance with alternative methods of the present teachings.

Fig. 11B is a schematic depiction of a second example voltage profile and the resultant electric field vector magnitudes that may be applied to an ion guide apparatus in alternation with the voltage profile of Fig. 7A, in accordance with alternative methods of the present teachings.

Fig. 12 shows an illustrative configuration configured to selectively set a mode of operation of an ion guide.

Fig. 13 shows illustrative components of a controller.

Fig. 14 shows an illustrative method for selectively setting a mode of operation of an ion guide.

Fig. 15 shows another illustrative method for selectively setting a mode of operation of an ion guide.

Fig. 16 shows another illustrative method for selectively setting a mode of operation of an ion guide.

Figs. 17A-17B show illustrative plots of $m/z$ linearity at different frequencies.

Fig. 18 shows an illustrative computing device.

## DETAILED DESCRIPTION

The present application relates to mass spectrometers and mass spectrometry. More particularly, the present application relates to ion optics components, including ion guides, ion traps, and ion separation devices that are employed in mass spectrometers and to methods of use of such ion optics components within mass spectrometers. All patents, patent application publications and other published articles mentioned herein are hereby incorporated by reference herein in their entirety as if set forth fully herein.

In some examples, as a result of the $m/z$-dependence of the pseudopotential-derived forces (i.e., travelling pseudopotential wells) that drive ion migration in RF-modulated travelling-wave devices, a variety of ion sorting and/or ion storage devices may be constructed by counteracting the $m/z$-dependent pseudopotential force with an opposing $m/z$-independent force, such as an opposing DC field. Such RF-DC ion sorting devices may be configured to provide initial coarse separation and temporary storage of ion species without reliance upon gas flow. Such RF-DC sorting devices, as disclosed herein, may be deployed under both high-vacuum and moderate vacuum conditions and are therefore more versatile than conventional ion sorting devices. Whereas existing DC travelling wave devices require RF containment that is separate from the DC travelling wave to move ions, the apparatuses and methods described herein utilize RF voltage to both contain ions and move ions.

Since an RF-derived travelling wave has an $m/z$-dependent force (i.e., a greater force at lower $m/z$ values), it is possible to oppose this force with a second $m/z$-independent force. For example, a static opposed DC axial electric field may be created by applying a simple DC potential gradient across a plurality of electrodes. The combination of opposed forces may then be used, to advantage, to spatially sort ions within an ion guide or ion trapping device. Such a pair of opposing applied forces will create three different ion behavior conditions, as follows: (1) firstly, in the case of ions having the smallest $m/z$ values, for which the force attributable to the RF travelling wave dominates the DC-field force, the movement will be in the direction of the travelling wave; (2) in the case of ions having the greatest $m/z$ values, for which the DC axial field dominates, the movement will be opposite to the direction of the travelling wave; and (3), finally, for ions having a particular critical $m/z$ value, RF-derived and DC-potential gradient-derived forces will balance such that ions will not move in either direction and will be trapped within a specific region within an ion optical device, where the position of the specific region depends on the particular $m/z$ value and on the applied voltages.

By coordinated application of an RF field and a static DC field, it is possible, in some embodiments, to configure an ion guide so that low-$m/z$-value ions and high-$m/z$-value ions are caused to migrate in opposite directions, while, at the same time, ions having the critical $m/z$ value are trapped at a trapping location within the ion guide. According to some other embodiments, a gradient may be applied either to the RF field, the DC field or both the RF and DC fields. In such cases, the trapping location will become $m/z$ dependent, thereby both trapping and spatially separating ions based on their respective $m/z$ values. Therefore, in such embodiments, the ions may be spatially sorted along a length of the ion guide, similar to the fashion in which ions in liquid-phase isoelectric focusing move to the point in a pH gradient that makes the ions neutral. The RF field gradient can be created by changing the RF amplitude, V, along the length of the device or, more simply, by changing the electrode geometry by varying either axial spacing of the electrodes or by varying the electrode aperture diameters. The DC field gradient can most simply be created by altering the resistors in the divider network used to create the gradient.

The spatial and temporal ion separation and sorting provided by apparatuses described herein do not rely on gas flow. However, optimal operation of such apparatuses may be achieved with ambient gas pressures in the range of 0.01 Torr to approximately 10 Torr. At lower pressures, when an ion is pulled from a pseudopotential well by the opposed DC, there are insufficient gas collisions to allow the ion to settle into an adjacent pseudopotential well. In such low-pressure regimes, ions may be pulled through or across several travelling RF pseudopotential wells by an opposing DC field. Such low-pressure behavior is harmful to the ultimate resolution of the separation. The strength of the ion mobility contribution will be dependent on ion characteristics as well as various controllable parameters, such as gas composition, gas temperature, etc. Unfortunately, this ion mobility contribution is difficult to predict as a result of the time-varying RF field. Accordingly, it may be necessary, under some circumstances, to perform an appropriate calibration of each apparatus' response under various chosen experimental conditions and various classes of ions. In many embodiments, even at pressures in the range from 0.01 to 0.5 Torr, the contribution of ion mobility effects between ions can be small or even negligible in comparison to effects caused by differences in mass-to-charge ratio or differences in charge of the ions.

In the description herein, it is understood that a word appearing in the singular encompasses its plural counterpart, and that a word appearing in the plural encompasses its singular counterpart, unless implicitly or explicitly understood or stated otherwise. Furthermore, it is understood that, for any given component or embodiment described herein, any of the possible candidates or alternatives listed for that component may generally be used individually or in combination with one another, unless implicitly or explicitly understood or stated otherwise. Moreover, it is to be appreciated that the figures, as shown herein, are not necessarily drawn to scale, wherein some of the elements may be drawn merely for clarity of the invention. Also, reference numerals may be repeated among the various figures to show corresponding or analogous elements. Additionally, it will be understood that any list of candidates or alternatives is merely illustrative, not limiting, unless implicitly or explicitly understood or stated otherwise.

Unless otherwise defined, all other technical and scientific terms used herein have the meaning commonly understood by one of ordinary skill in the art to which this invention belongs. In case of conflict, the present specification, including definitions, will control. It will be appreciated that there is an implied "about" prior to any quantitative terms mentioned in the present description, such that slight and insubstantial deviations are within the scope of the present teachings. In addition, the use of "comprise", "comprises", "comprising", "contain", "contains", "containing", "include", "includes", and "including" are not intended to be limiting. As used herein, "a" or "an" also may refer to "at least one" or "one or more." Also, the use of "or" is inclusive, such that the phrase "A or B" is true when "A" is true, "B" is true, or both "A" and "B" are true.

As used herein, the term "DC", when referring to a voltage applied to one or more electrodes of a mass spectrometer component (such as an ion tunnel or ion funnel), does not necessarily imply the imposition of or the existence of an electrical current through those electrodes. The term "DC" is thus used herein to distinguish the referred-to voltage(s) from applied oscillatory voltages that oscillate at radio frequencies and that, themselves, are referred to as "RF" voltages.

As used herein, the term "static", as applied to a DC electric field (a vector field) or to an RF amplitude, refers to a DC field or an RF amplitude that is maintained essentially unchanging with time during a period of time, possibly with inconsequential variations of not greater than ten percent of an average field strength or an average RF amplitude. The term "uniform", as applied to a DC field, refers to a DC field that is maintained so as to have a magnitude and a direction that do not substantially vary, other than inconsequential statistical variations, across a span encompassing a series of electrodes; for example, across a series of electrodes spanning a length of an ion optical component from an ion entrance end to an ion exit end. Conversely, the terms "gradient" and "non-uniform", as applied to a DC field, refer, respectively, to a spatial variation, spanning a series of electrodes, of at least a magnitude of a DC field and to a DC field that is caused to exhibit such a variation. It should be noted that a "static" DC field may either be uniform or may have a gradient. The term "uniform", as applied to an RF amplitude, refers to an RF amplitude that is maintained so as to not substantially vary across a span encompassing a series of electrodes. Conversely, the terms "gradient" and "non-uniform", as applied to an RF amplitude, refers to a spatial variation, spanning a series of electrodes, of the applied amplitude.

As used herein, the terms "dynamic" and "ramped", as applied to either a DC field or an RF amplitude, refer to a DC field or an RF amplitude that is caused to vary with time, in either a monotonically increasing fashion or a monotonically decreasing fashion, over a period of time. The ramping of the magnitude of a DC field that is applied across a series of electrodes requires the ramping of a DC potential that is applied to a subset (i.e., to one or more) of those electrodes. Similarly, the ramping of an RF amplitude of RF waveforms that are applied across a series of electrodes requires the ramping of an RF amplitude that is applied to one or more of those electrodes.

A DC field or RF amplitude that is maintained in a static state over a first time period may, at other times that occur either before or after the time period, be maintained in a dynamic or ramped state and vice versa. Likewise, a DC field or RF amplitude that is maintained in a uniform state over a first time period may, at other times, be maintained in a non-uniform state and vice-versa. As used herein, the terms "urge" and "urges", when used in relation to the effect, upon an ion or ions, of a direction of an applied force, do not necessarily imply that the ion or ions are caused to move in that direction in response to the force, since the direction of movement of any ion at the time of application of a force depends on its initial momentum vector as well as the vector sum of all such applied forces.

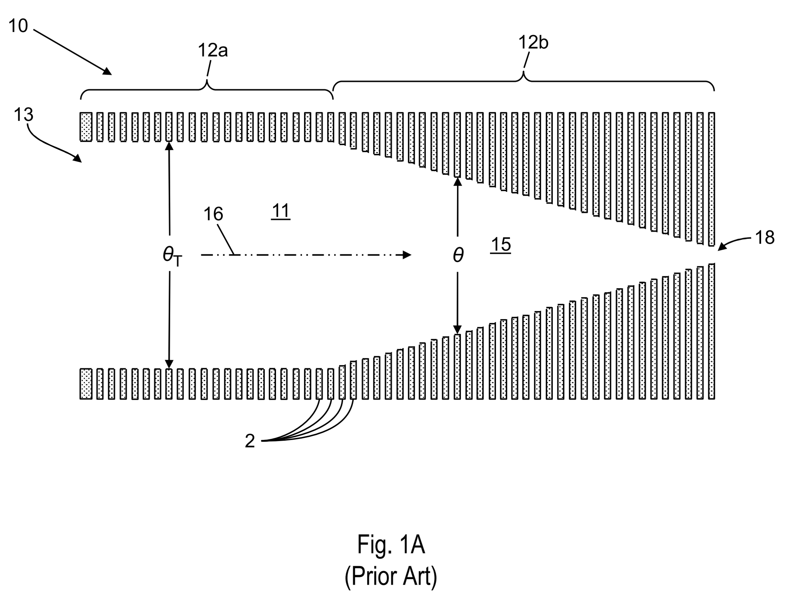

As noted above, so-called "stacked-ring ion guides" are frequently employed in mass spectrometry to either guide or otherwise manipulate ions. In this document, the term "stacked-ring ion guides" is used to refer to ion guides that either: comprise a series or stack of ring or ring-like electrodes; comprise a series or stack of plate or plate-like electrodes; and/or comprise a series or stack of printed circuit boards that have electrode structures printed on the board surfaces. Stacked-ring ion guides are often used as either so-called "ion tunnels" or "ion funnels". Fig. 1A provides a schematic longitudinal cross-sectional view, of a stacked-ring ion guide apparatus 10 that includes both an ion tunnel section 12a and an ion funnel section 12b. It should be noted, however, that many apparatuses that are referred to in the art simply as "ion funnels" have both an ion tunnel section and an ion funnel section as depicted in Fig. 1A.

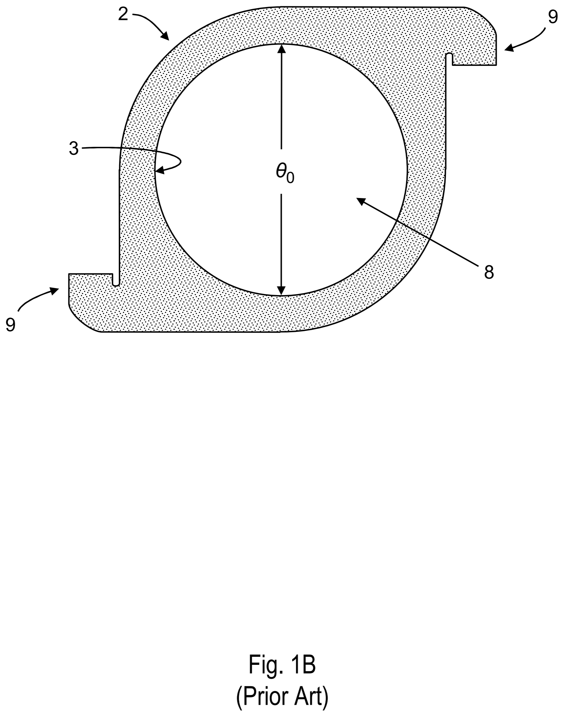

Generally described, the stacked-ring ion guide apparatus 10 comprises a plurality of closely spaced ring electrodes or plate electrodes 2. A schematic view of a typical individual ring or plate electrode 2 is provided in Fig. 1B. For purposes of clarity, Fig. 1A depicts only a small number of electrodes 2. It should be kept in mind that, in practice, a typical ion funnel or ion tunnel apparatus may comprise one-hundred or more individual electrodes. Each ring or plate electrode 2 (Fig. 1B) has an aperture 8 that is typically circular in form and that is defined by a ring inner surface 3. Each ring electrode 2 may comprise one or more tabs, such tabs 9, for mounting to a support structure (not shown) and possibly providing electrical connection to one or more power sources (e.g., a voltage source and/or any other type of power supply.

Within an ion tunnel, as exemplified by the ion tunnel section 12a, all apertures of the electrodes of the section have a constant diameter $\theta_T$. In contrast, within an ion funnel section 12b, the diameters, $\theta$, of the various apertures generally decrease along a direction away from an ion inlet end 13 and towards an ion outlet end 18 of the device. As used in this document, the term "wide end" is used to designate an end of an ion funnel section at which the variable aperture diameter, $\theta$, is greatest and the term "narrow end" is used to designate the opposite end of the ion funnel section, at which the aperture diameter is smallest. In operation, oscillatory radio-frequency (RF) voltages are applied to the electrodes in a prescribed phase relationship to radially confine the ions to the interior of the device. According to the generally-prescribed conventional phase relationship, the phase of the RF voltage waveform of each electrode of the stack is $\pi$ radians (180 degrees) out of phase with the phase of each immediately adjacent electrode. The collection of all of the apertures of all of the electrodes 2 define an ion occupation volume 11, within which ions generally travel from the ion inlet end 13 to the ion outlet end 18 of the apparatus 10, as indicated by the arrow on longitudinal axis 16. In general operation, pseudopotential wells centered about the axis 16 and generated by the applied RF configuration serve to confine ions within the ion occupation volume 11. The relatively large electrode apertures of the ion inlet end 13 and the ion tunnel portion 12a of the apparatus are generally employed for the purpose of capturing a dispersed or diffuse cloud of ions. In contrast, the decrease, towards the ion outlet 18, of electrode apertures of the ion funnel portion 12b causes the ion cloud to be squeezed into a narrow beam that can be passed into a high-vacuum chamber through a narrow aperture. Migration of ions in the direction from the ion inlet end towards the ion outlet may be facilitated by a flow of gas within which the ions are entrained. Also, the ions may be urged in the same direction by provision of a DC axial field that is generated by differentially providing DC voltages to the electrodes 2.

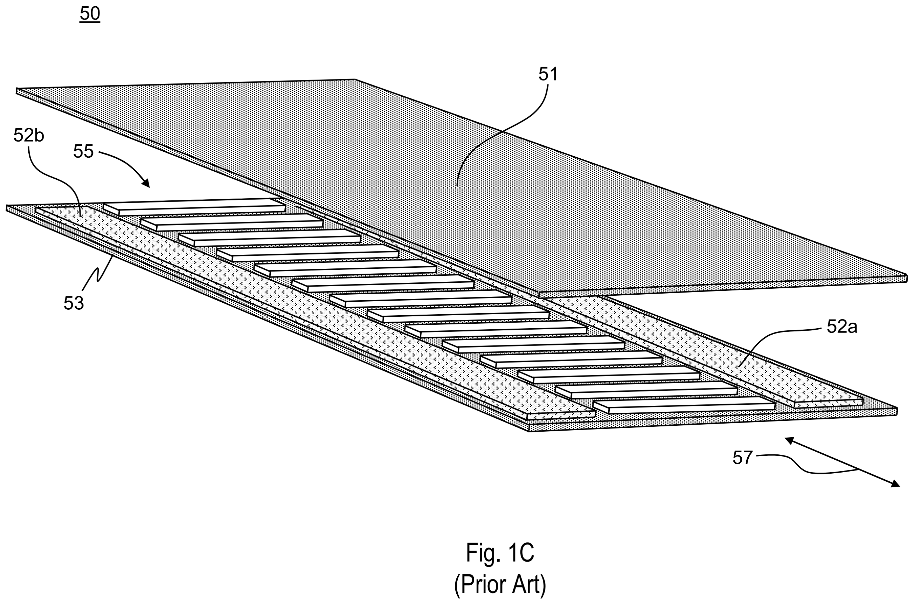

Fig. 1C is a schematic depiction of another known type of ion manipulation and ion guiding device 50, as taught in the previously mentioned U.S. Pat. No. 10,692,710. As described in that patent, the device 50 comprises two parallel substrate plates or wafers 51 and 53 that are spaced apart from one another, each plate or wafer having a surface upon which a plurality of electrodes is disposed. For example, the plates or wafers 51 and 53 may be the substrates of printed circuit boards. The electrode bearing surfaces may face one another across a gap between the two substrate plates or wafers as shown. A central axis 57 is defined through the device 50. Each of the electrode-bearing surfaces has an array 55 of inner electrodes and also has outer guard electrodes 52a, 52b. The outer guard electrodes 52a, 52b are positioned on either side of the array 55 of inner electrodes. The array 55 of inner electrodes and the outer electrodes 52a, 52b extend substantially along a length of the electrode-bearing surfaces of the substrate plates or wafers 51, 53. In operation, ions can be confined within the gap between the electrode-bearing surfaces and guided parallel to the central axis 57 as taught in U.S. Pat. No. 10,692,710.

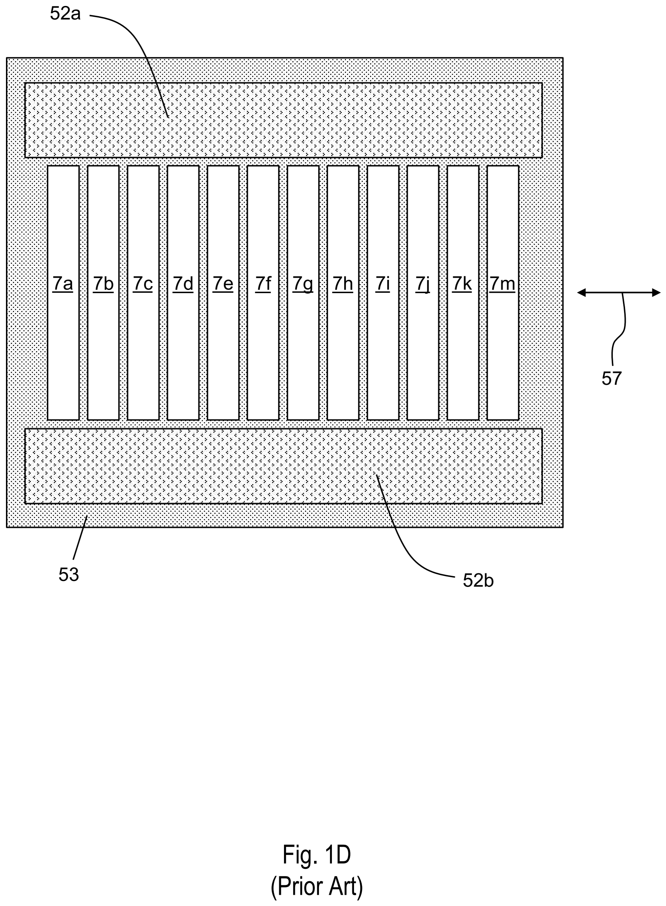

Fig. 1D schematically shows a portion of an electrode-bearing surface of an individual substrate plate or wafer 53 of the known ion manipulation and ion guiding device 50. In the illustrated example of Fig. 1D, each of the outer guard electrodes 52a, 52b comprises a single elongated electrode that is elongated parallel to the central axis 57. The array 55 of electrodes comprises a series of individual electrodes 7a, 7b, 7c, ..., 7m. Although twelve such individual electrodes are shown, the array 55 can comprise any number of electrodes. A voltage source (not shown) can apply a voltage to each electrode 7a-7m, individually. As noted above in the Background section of this document, U.S. Pat. No. 10,692,710 further teaches, using the ion manipulation device 50 as an example, that the various electrodes of the inner-electrode array 55 may be logically grouped into consecutive subsets of electrodes (e.g., sets comprising three or more electrodes each). The patent further teaches that, by providing a differently modulated RF waveform to each electrode of each subset, a travelling wave may be generated that tends to urge ions parallel to the central axis 57 through the apparatus 50.

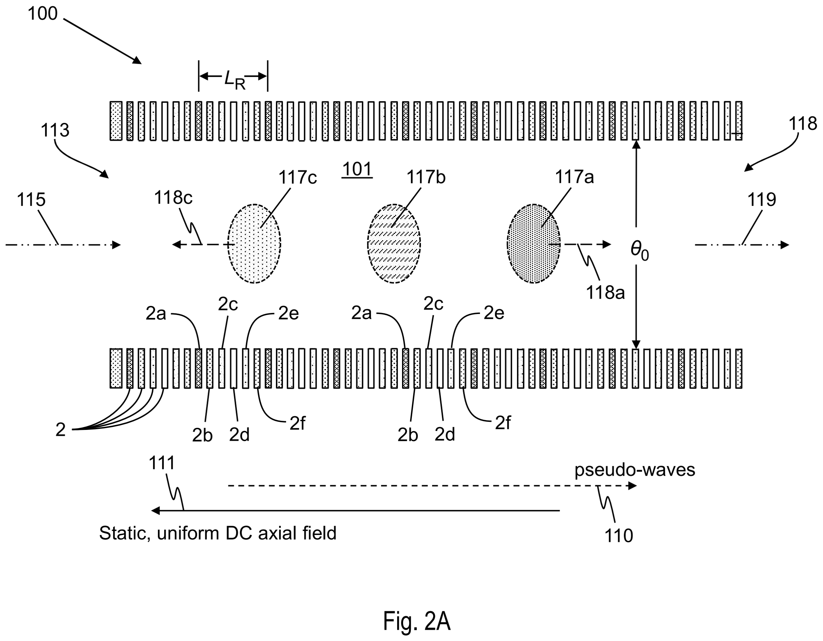

Fig. 2A is a schematic cross-sectional depiction of a first embodiment of an ion tunnel stacked-ring ion guide 100 in accordance with the present teachings. Although the stacked ring ion guide 100 is depicted as comprising only an ion tunnel portion, it may alternatively comprise a combination of any number of ion funnel and ion tunnel portions. In general operation of the apparatus 100, a stream of ions 115 comprising an unseparated mixture of ion species is delivered to an ion occupation volume 101 of the apparatus through an ion inlet 113. By means of the operation of the apparatus 100, the original mixture of ion species may be separated into a plurality of packets - for example, the ion packets 117a, 117b and 117c as shown - each of which comprises a different subset of the original set of ion species. These partially-separated packets of ions may then be caused to exit the apparatus as a stream 119 of ion packets through ion outlet 118.

The physical configuration of electrodes 2 of the apparatus 100 (Fig. 2A) is similar to the physical configuration of the electrodes of the ion tunnel portion 12a of the stacked ring ion guide 10, with each electrode having an aperture of diameter $\theta_0$ and the collection of apertures defining the ion occupation volume 101. Despite this similarity, the apparatus 100 differs from the apparatus 10 (Fig. 1A) in that:

(a) the electrodes are logically grouped into a stacked sequence of subsets of electrodes, with each of the subsets comprising (in this example) exactly four electrodes;

(b) RF voltage waveforms applied to the electrodes vary within each subset of electrodes and with time in a fashion that generates a plurality of pseudopotential wells within which ions tend to be concentrated, whereby the pseudopotential wells are caused to migrate in a desired direction parallel to the axis of the apparatus, the set of migrating pseudopotential wells being referred to herein as an RF travelling wave or, equivalently, a "pseudo-wave"; and

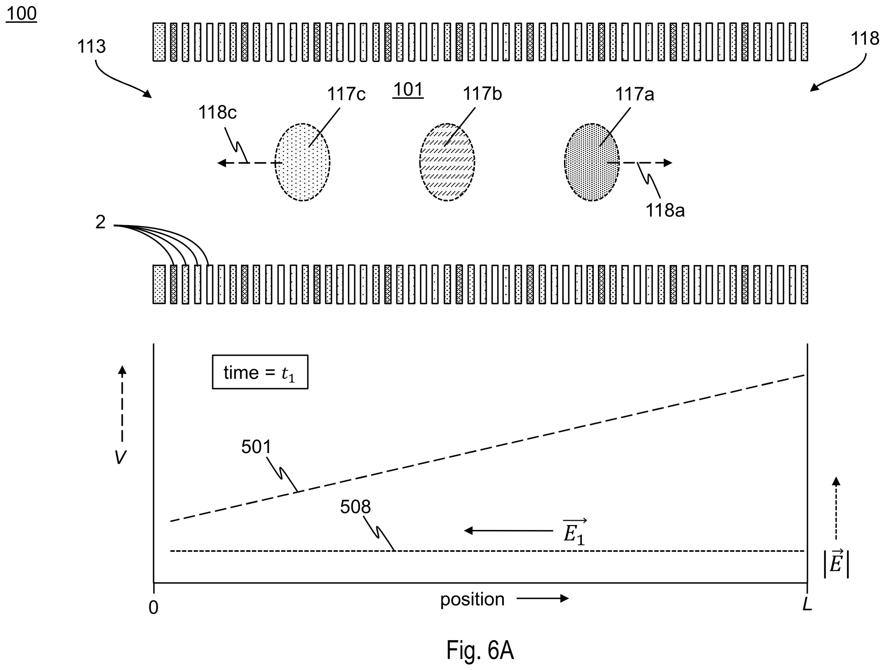

(c) an axial DC electric field is provided within the ion occupation volume that tends to urge ions in a direction opposite to the migration direction of the pseudopotential wells. Fig. 6A is a reproduction of the schematic cross-sectional depiction of the apparatus of Fig. 2A and of the ion packets therein, further showing a schematic example of how DC voltages, V, may be apportioned among stacked electrodes to generate the static, uniform DC axial field. The axial electric field vector, $\overrightarrow{E_1}$, in the vicinity of the axis of the apparatus is related to the gradient of the applied voltages (voltages shown as plot 501 in Fig. 6A). In the example, the gradient of V is essentially constant across the length of the ion tunnel apparatus 100. This is reflected in the fact that the magnitude, $|\overrightarrow{E_1}|$, of the electric field (shown as plot 508 in Fig. 6A) in the vicinity of the axis is constant.

Specifically, with regard to the logical grouping of the electrodes into subsets, Fig. 2A depicts two such groups (i.e., subsets), each group comprising a first electrode 2a, a second electrode 2b, a third electrode 2c and a fourth electrode 2d. Although only two such groups are labeled in Fig. 2A, it is to be understood that, in the illustrated embodiment, the grouping into subsets of four electrodes each pertains to all electrodes 2 of the apparatus, extending from the ion inlet 113 to the ion outlet 118. According to some alternative embodiments, some portion of the electrodes may not be so organized into groups. Although four electrodes per subset are illustrated, the number of electrodes per subset, $N_e$, is not necessarily limited to four per subset. More generally, $N_e \geq 3$. A repeat distance, $L_R$, along the axis of the apparatus 100 (parallel to the arrows 115 and 119) is defined as the distance between successive electrodes 2a (or successive electrodes 2b, etc.).

Within each subset of electrodes of the apparatus 100, the four electrodes of the subset differ in that, in operation, each electrode is provided with a respective different RF voltage waveform, as discussed further below. All electrodes 2a are provided with a first RF voltage waveform that is, in embodiments, identical among all electrodes 2a. Likewise, all electrodes 2b are provided with a second RF voltage waveform that is, in embodiments, identical among all electrodes 2b. Likewise, a third voltage waveform is applied to all electrodes 2c and a fourth voltage waveform is applied to all electrodes 2d. Generally described, the $N_e$ voltage waveforms are chosen such that a set of migrating pseudopotential wells are generated along the axis of the apparatus (coincident with arrows 115 and 119), thereby forming a set of "travelling waves" that tend to urge ions along the axis. According to the example shown in Fig. 2A, the voltage waveforms are configured such that the travelling waves urge ions parallel to lines 115, 119 in a direction from the ion inlet 113 towards the ion outlet 118. However, according to some other embodiments as discussed further herein below, the voltage waveforms may be configured so as to urge ions in the opposite direction.

According to some embodiments of the present teachings, the RF voltage waveforms applied to the electrodes of the apparatus 100 may be selected as described in U.S. Pat. No. 9,799,503. That patent provides an example of a subset of four electrodes of a stacked-ring ion guide, wherein respective RF voltage waveforms are provided to the four electrodes such that a plurality of migrating pseudopotential wells create travelling waves within an ion guide. According to the aforementioned U.S. Pat. No. 9,799,503, the four RF voltage waveforms may be provided in accordance with the following first through fourth drive signals:

$$V_A = V_1 F(\omega_m t - \Phi_1)e^{j\omega t} \qquad \text{First RF drive signal} \qquad \text{Eq. 1a}$$
$$V_B = V_2 F(\omega_m t - \Phi_2)e^{j\omega t} \qquad \text{Second RF drive signal} \qquad \text{Eq. 1b}$$
$$V_C = V_3 F(\omega_m t - \Phi_3)e^{j\omega t} \qquad \text{Third RF drive signal} \qquad \text{Eq. 1c}$$
$$V_D = V_4 F(\omega_m t - \Phi_4)e^{j\omega t} \qquad \text{Fourth RF drive signal} \qquad \text{Eq. 1d}$$

where $t$ is time, $V_1$ through $V_4$ are zero-to-peak amplitudes, $j$ is the imaginary unit, the function F is a complex function of its argument and is periodic with period $2\pi$, and where scalar value $\Phi_1$ is a first phase, scalar value $\Phi_2$ is a second phase that is shifted by 90 degrees ($\pi/2$ radians) relative to the first phase, scalar value $\Phi_3$ is a third phase that is shifted by 180 degrees ($\pi$ radians) relative to the first phase, scalar value $\Phi_4$ is a third phase that is shifted by 270 degrees ($3\pi/2$ radians) relative to the first phase, and scalar values $\omega$ and $\omega_m$ may be angular frequencies in radians per second, with $\omega > \omega_m$. It is understood that the applied voltage is described by the real part of any resulting complex expression. The same patent also provides a specific example of the implementation of the expressions in Eqs. 1a-1d in which the applied voltages are as follows:

$$V_A = V_0 cos(\omega_m t)cos(\omega t) \qquad \text{First RF drive signal} \qquad \text{Eq. 2a}$$
$$V_B = V_0 cos(\omega_m t - \pi/2)cos(\omega t) \qquad \text{Second RF drive signal} \qquad \text{Eq. 2b}$$
$$V_C = V_0 cos(\omega_m t - \pi)cos(\omega t) \qquad \text{Third RF drive signal} \qquad \text{Eq. 2c}$$
$$V_D = V_0 cos(\omega_m t - 3\pi/2)cos(\omega t) \qquad \text{Fourth RF drive signal} f_C \qquad \text{Eq. 2d}$$

As noted above, the number of electrodes per subset is not limited to four electrodes per subset and may comprise any integer number, $N_e$, where $N_e \geq 3$. In such instances, the various electrodes, R, of each subset and the various voltage waveforms, $V(t)$, provided to the electrodes each subset may be enumerated, in order beginning with the electrode closest to the entrance inlet, by the index variable, i, as

$$R_1, R_2, \ldots, R_i, \ldots, R_{N_e} \qquad (3 \leq i \leq N_e)$$

and

$$V_1(t), V_2(t), \ldots, V_i(t), \ldots, V_{N_r}(t) \qquad (3 \leq i \leq N_e)$$

Then, each and every electrode denoted as $R_1$ will be provided with the same, identical waveform, $V_1(t)$. Likewise, each

and every electrode denoted as $R_2$ will be provided with the same, identical waveform, $V_2(t)$, etc. According to some embodiments, the phase shifts, $\Delta\Phi$, between any two successive electrodes of a subset are constant across the subset and are given by

$$\Delta\Phi = 2\pi/N_e \qquad \qquad \text{Eq. 3}$$

However, in accordance with some other embodiments, the phase shifts are not necessarily uniform across each subset.

In accordance with some other embodiments of the present teachings, the RF voltage waveforms provided to the electrodes of the apparatus 100 may be selected as described in U.S. Pat. No. 10,692,710, which describes creation of travelling waves by the provision of frequency-modulated waveforms that are driven by frequency-modulated signals, $S_{FM}$, represented by

$$S_{FM} = V_c cos(2\pi f_c + \beta S_{MS})$$

where $f_C$ is the "carrier frequency" (i.e., the frequency of the unmodulated conventional RF voltage waveform), $V_C$ is the voltage amplitude of the RF waveform, $\beta$ is a frequency modulation index and $S_{MS}$ is a frequency-modulating periodic waveform of frequency, $f_M$, which is a lower frequency than $f_C$. This latter patent provides a specific example in which the electrodes of a stacked-ring ion guide are organized into subsets of eight electrodes each and the phase of the frequency-modulating periodic waveform, $S_{MS}$, changes by $2\pi/8$ radians (45 degrees) between each pair of electrodes.

With reference, once again, to Fig. 2A, arrow 110 represents the migration direction of RF-generated pseudo-potential wells (i.e., travelling waves) that may be generated as described above. As indicated by arrow 110, the application of RF waveforms may be configured so that the travelling waves exert forces on ions that tends to urge the ions in the "forward" direction, which is generally from the ion inlet 113 towards the ion outlet 118. However, in alternative embodiments, the direction of the pseudopotential well migration may be reversed, relative to the migration direction indicated in Fig. 2A, by reversing the phase relationships of applied drive waveforms within each subset of electrodes. Fig. 2A also shows that, in accordance with the present teachings, a static, uniform DC axial field is also generated that exerts a force on the ions that tends to oppose the force that is exerted by the pseudopotential well migration. A schematic example of the magnitude of a static uniform DC axial field is provided by plot 508 of Fig. 6A. Accordingly, the arrow 111 indicates the direction in which the same ions are urged to migrate by the applied static, uniform DC axial field. Thus, according to the operation shown in Fig. 2A, the DC axial field is applied so as to tend to urge ions in a "reverse" direction, from the ion outlet 118 towards the ion inlet 113. It should be noted, however, that if the direction of the pseudopotential well migration is reversed from the direction shown in Fig. 2A, such that the travelling waves instead tend to urge the ions towards the ion inlet 113, then the direction of the DC axial field is also reversed relative to the direction shown in Fig. 2A, such that the so-reversed DC axial field urges ions towards the ion outlet 118.

The DC axial field that is created within the ion occupation volume 101 may be generated, in known fashion, by dividing an end-to-end voltage difference across the length of the apparatus through the inclusion of a series of resistors between the electrical connections to the various electrodes 2. Alternatively, the DC axial field may be generated by any one of a number of other known methods.

The opposed pseudopotential and DC axial field forces that are applied as shown in Fig. 2A create three different ion behavior conditions, as follows: (1) firstly, in the case of ions having the smallest $m/z$ values (e.g., the ions of ion packet 117a), for which the force attributable to the RF travelling wave dominates over the DC-field force, the movement will be in the direction of the travelling wave, as indicated by motion vector 118a; (2) in the case of ions having the greatest $m/z$ values (e.g., the ions of ion packet 117c), for which the DC axial field dominates, the movement will be opposite to the direction of the travelling wave, as indicated by motion vector 118c; and (3), finally, for ions having a particular critical $m/z$ value that depends on the applied voltages (e.g., the ions of ion packet 117b), RF-derived and DC-gradient-derived forces will balance and such ions will not move in either direction. Thus, the apparatus 100, when operated as indicated in Fig. 2A, performs simultaneously as: (a) a mass filter that permits only ions having relatively low-$m/z$ values (i.e., less than the critical value) to be transmitted along outlet stream 119 to a downstream apparatus (such as a quadrupole mass filter and/or a collision cell and/or a mass analyzer); (b) a single-mass-to-charge ion trap or ion accumulator for ions having the critical $m/z$ value; and (c) a filter that eliminates all ions having $m/z$ values that are greater than the critical value.

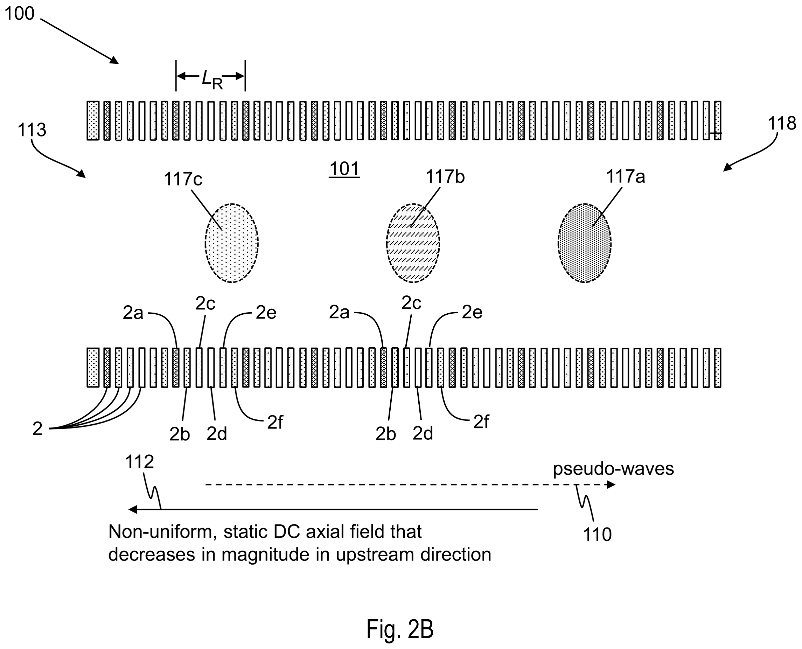

Fig. 2B is another schematic cross-sectional depiction of the ion tunnel stacked-ring ion guide 100, as introduced in Fig. 2A, but configured and operated in an alternative mode that causes differential migration of ions through the ion guide as well as spatially separated trapping of ion species in accordance with their respective mass-to-charge (m/z) ratios. According to the mode of operation indicated in Fig. 2B, the applied static DC axial field that opposes the pseudopotential-derived travelling waves is not uniform but, instead, decreases in magnitude in a general direction from the ion outlet 118 towards the ion inlet 113. Specifically, as indicated by arrow 112, the DC axial field continues to generate forces that tend to urge ions in an "upstream" direction, opposite to the "downstream" direction (as indicated by arrow 110) in which the ions are urged by the travelling waves. However, the magnitude of the DC axial field vector is non uniform and decreases in the upstream direction. Under such operation, various ion species within a range of $m/z$ values will be trapped within the ion occupation volume, as each such ion species migrates to and accumulates at an axial position at which the upstream-directed DC axial field exactly balances the downstream-directed pseudopotential-derived force that is exerted on ions of the species' mass-to-charge value. For example, in Fig. 2B, schematic axial equilibrium positions are indicated for a first packet of ions 117a having mass-to-charge ratio $(m/z)_L$, a second packet of ions 117b having mass-to-charge ratio $(m/z)_M$, and a third packet of ions 117c having mass-to-charge ratio, $(m/z)_H$, where $(m/z)_H > (m/z)_M > (m/z)_L$. Although the equilibrium positions of only three packets of ions having specific $m/z$ values are illustrated in Fig. 2B, there will generally exist, in practice, a virtually continuous range of equilibrium positions for ions having $m/z$ values within a certain $m/z$ range, with the equilibrium $m/z$ values decreasing in the general direction towards the ion outlet 118. Additionally, certain ion species having small $m/z$ values that are outside of the range may migrate towards the ion outlet and certain other ion species having large $m/z$ values that are outside of the range may migrate towards the ion inlet. Accordingly, in the mode of operation that is schematically illustrated in Fig. 2B, the apparatus 100 functions as a multiple-mass-to charge ion-sorting ion trap.

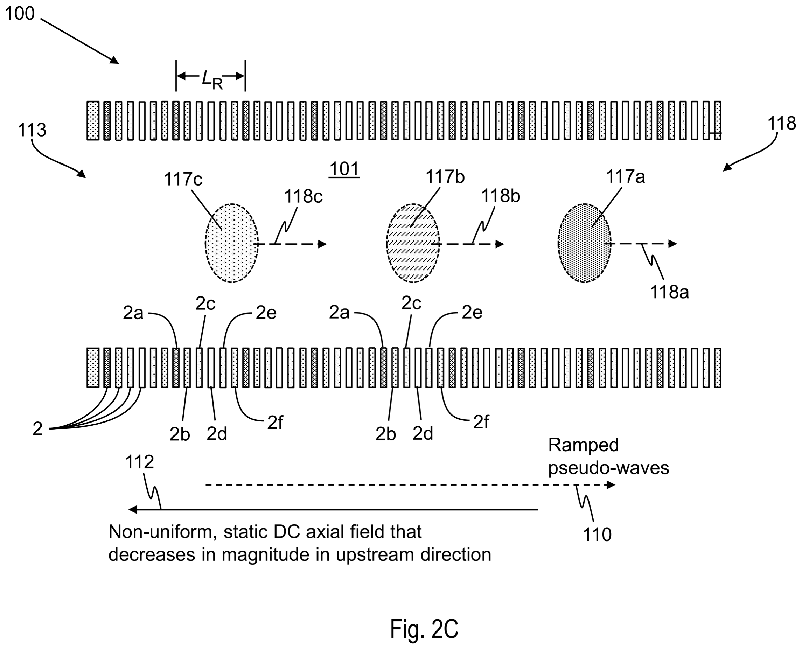

In order to extract the ions that are trapped at various equilibrium positions, as shown in Fig. 2B, the amplitude of the main RF voltage, either phase-shifted and/or frequency-modulated as described above, may be ramped upward (i.e., progressively increased) with time so that the equilibrium positions corresponding to all $m/z$ values migrate, over the course of the RF voltage amplitude ramping, towards the ion outlet, as indicated by the displacement vectors 118a, 118b and 118c in Fig. 2C. Additionally or alternatively, the magnitude of the opposing DC field may be ramped downward (i.e., progressively decreased). In this instance, trapped ions having the smallest $m/z$ values (e.g., the ions of packet 117a) will be the first to pass out of the ion outlet and ions having the greatest $m/z$ values (e.g., the ions of packet 117c) will exit last.

It should be noted that, in alternative embodiments, the migration direction of the travelling waves and the direction of the opposing DC field may be reversed from the directions shown in Figs. 2A-2C. In such alternative embodiments, the ion species having the greatest $m/z$ values will be the first to be outlet from the apparatus, provided that the "direction" of ramping (i.e., either ramping "up" or ramping "down") of the RF amplitude (of travelling waves that urge ions towards the ion inlet 113) and the "direction" of ramping of the magnitude of the DC field (that urge ions towards the ion outlet 118) are also reversed. It should be further noted that, although many of the elementary examples discussed herein refer to ramping of either the RF amplitude or the DC field, more generally the RF amplitude and DC field may be ramped simultaneously, whereby, during the simultaneous ramping, the RF amplitude and the magnitude of the DC field either both increase or both decrease. In other instances, the simultaneous ramping may comprise an increase of the RF amplitude and a simultaneous decrease in the magnitude of the DC field. In still other instances, the simultaneous ramping may comprise a decrease in the RF amplitude and a simultaneous increase in the magnitude of the DC field.

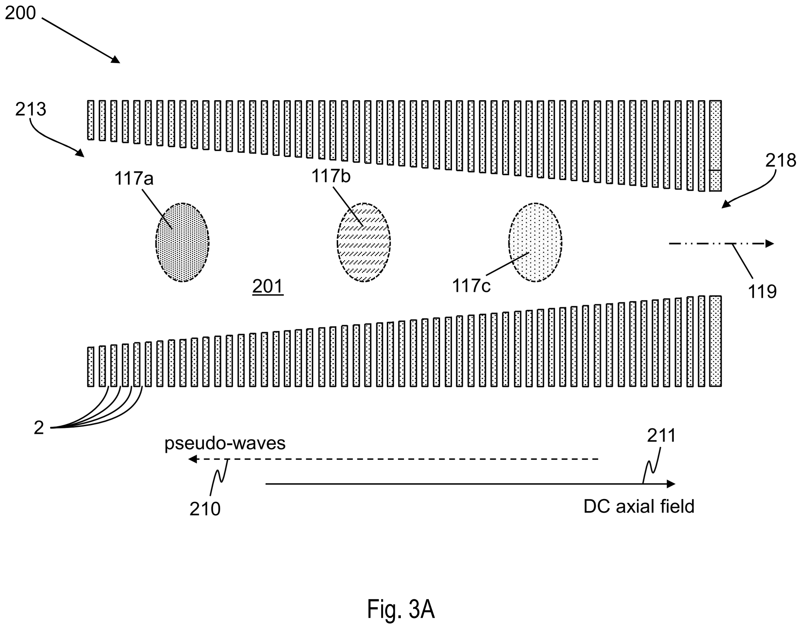

As described above, a stacked ring ion guide that is in the form of an ion tunnel may be made to function as either (a) a single-mass-to-charge ion trap or ion accumulator (as described with reference to Fig. 2A) by providing a uniform DC axial field in opposition to a travelling wave that is uniformly applied across the length of the apparatus or (b) a multiple-mass-to charge ion-sorting ion trap when there is a longitudinal spatial gradient in either the provided opposing DC field and/or the migrational motive force of the pseudo-wave. For an ion tunnel apparatus, the act of creating a "longitudinal spatial gradient in the migrational motive force of the pseudo-wave" requires providing different RF waveforms (e.g., different RF amplitudes) to the electrodes of the apparatus at various different positions between the ion inlet and the ion outlet. In such instances, the required electronics may be complex, expensive and/or difficult to design or fabricate. However, in the case of an ion funnel ion guide apparatus, such as the ion funnel apparatus 200 depicted in Fig. 3A, a gradient in the depth of pseudopotential wells - and, thereby, a gradient in the migrational motive force -is created by the geometry of the device. Specifically, within the ion funnel apparatus 200, the depths of the various pseudopotential wells increase in the direction of convergence of the ion funnel (e.g., see Fig. 1 of U.S. Pat. No. 9,799,503) essentially by virtue of the increasing proximity of electrode edges to the ion beam (centered near the device axis) in the same direction. Accordingly, with the direction of the RF-generated travelling waves directed (arrow 210) so as to urge ions towards the ion inlet 213 and the DC field directed (arrow 211) to urge ions towards the ion outlet 218, the apparatus 200 may be operated as a multiple-mass-to charge ion-sorting ion trap without the application of any field gradients. Using the configuration shown in Fig. 3A, relatively "light" (small m/z) ions may be trapped within region 117a proximal to the ion inlet 213 while, simultaneously, relatively "heavy" (large m/z) ions are trapped within region 117c which is proximal to the ion outlet 218. As noted previously, intermediate-m/z ions are trapped within region 117b. The trapped ions may be released, in reverse order of their $m/z$ ratios by either ramping up (i.e., to greater values) the magnitude of the DC field and/or ramping down (i.e., to lesser values) the applied RF amplitudes.

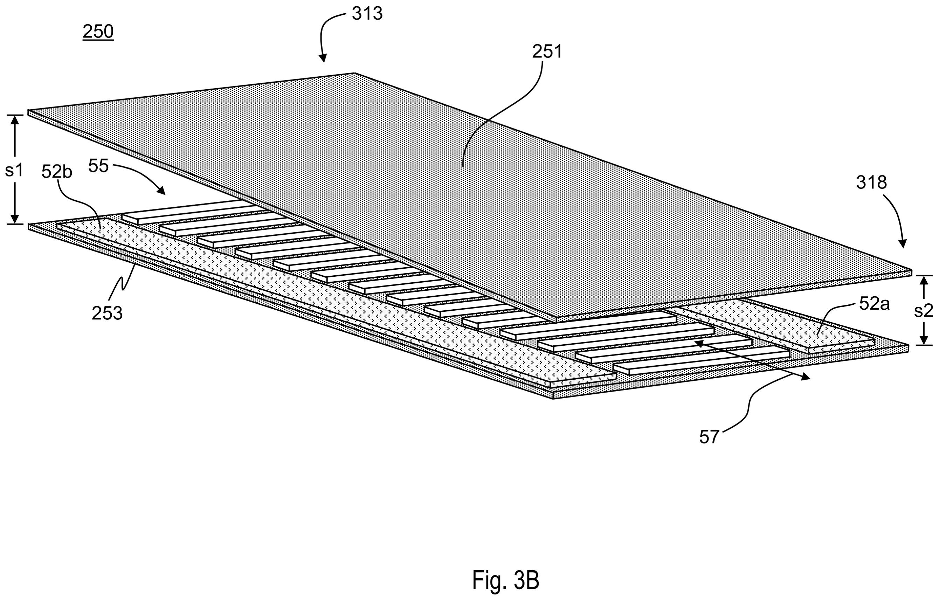

Fig. 3B is a modified version, in accordance with the present teachings, of the ion manipulation and ion guiding device of Fig. 1C. The ion manipulation and ion guiding device 250 that is depicted in Fig. 3B is modified, relative to the device 50 (Fig. 1C), in a fashion that enables it to be operated similarly to the operation, as discussed above, of the ion funnel 200 (Fig. 3A). In contrast to the device 50, in which parallel plates or wafers 51 and 53 are configured to support the arrays 55 of inner electrodes as well as the sets of outer guard electrodes 52a, 52b, the modified device 250 is configured such that the plates or wafers 251 and 253 converge towards one another along a direction away from an ion inlet 313 and towards an ion outlet 318. For example, as shown in Fig. 3B, the plates/wafers 251 and 253 are separated from one another at the ion inlet 313 by a first separation distance, $s_1$, and are separated from one another at the ion outlet 318 by a second separation distance, $s_2$, where $s_1 > s_2$ and wherein there is a continuous convergence of the plates/wafers 251, 253 between the ion inlet 313 and the ion outlet 318.

U.S. PatIn some examples, an RF travelling wave may be created along the axis 57 of the device 50 by the manipulation of main RF axial-confinement waveform(s) that are applied to the series of individual electrodes 7a, 7b, 7c, ... of the mutually-facing electrode arrays 55 (see Fig. 1D). Additionally, a DC field that opposes the ion motion that is urged by the RF travelling waves may also be generated within either the device 50 (Fig. 1C) or the modified device 250 (Fig. 3B). For example, a static uniform DC field may be generated within either the device 50 or the modified device 250 by apportioning, among the plurality of inner electrodes of each plate/wafer 251, 253, a DC potential difference that is imposed between the ion inlet 313 and the ion outlet 318. The apportionment of the voltage difference may be achieved, in known fashion, by a voltage divider system. Additionally or alternatively, an axial DC field may be generated or an otherwise-generated axial field may be supplemented by providing the guard electrodes 52a, 52b of each plate/wafer as composed of an electrically resistive material (as opposed to an electrically conductive material, such as a metal). For example, resistive guard electrodes 52a, 52b may be formed of any one of a number of suitable materials (e.g., without limitation, doped glasses, cermets, polymers, etc.) having electrically resistive properties.

Because, within the device 250, the electrodes of the two electrode arrays 55 (one electrode array supported on each of the plates/wafers 251, 253) progressively approach one another along a direction from the ion inlet 313 towards the ion outlet 318, there thus exists a gradient in the depth of pseudopotential wells, with the well depth increasing in the same direction. The increasing well depth creates a gradient in the migrational motive force that is provided by the RF-generated travelling waves. Accordingly, if the RF-generated travelling waves are configured to urge ions that are within the device 250 away from the ion outlet 318 and towards the ion inlet 313 and if the urging of the travelling waves is opposed by a static, uniform DC field that urges the ions towards the ion outlet 318, then different ion species having different respective $m/z$ values will establish different respective equilibrium positions within the device. In this situation, the distribution of equilibrium positions will be similar to the depiction in Fig. 3A, wherein ions 117a having lesser mass-to-charge ratios are closer to the ion inlet than ions 117b, 117c having greater mass-to-charge ratios and wherein ions 117c having the greatest mass-to-charge ratios are closest to the ion outlet. The trapped ions may then be released from the device 250, in reverse order of their $m/z$ ratios by either ramping up (i.e., to greater values) the magnitude of the DC field and/or ramping down (i.e., to lesser values) the applied RF amplitudes.

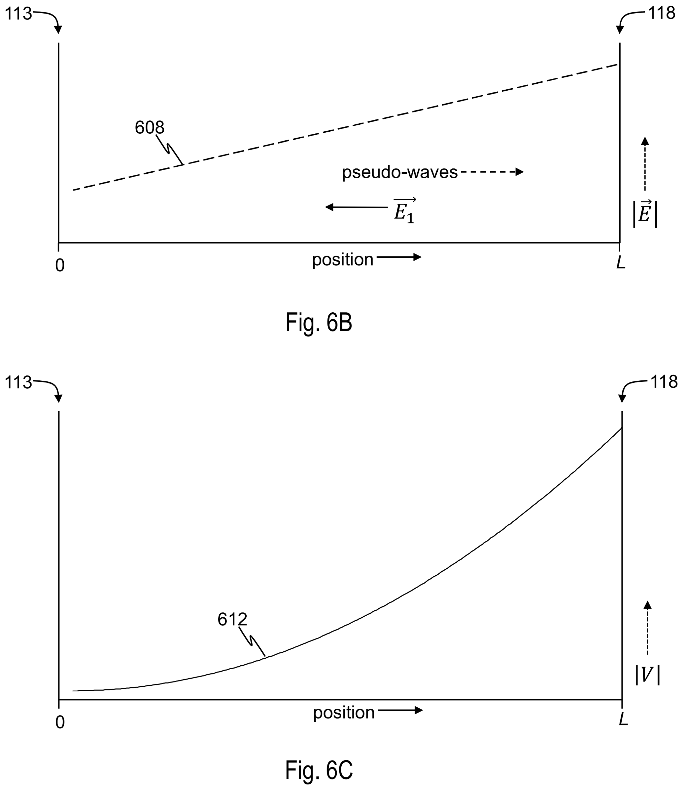

The following discussion relates to Figs. 6A-6H, which are various schematic graphs of voltages and DC electric fields within an ion guide that is operated in accordance with the present teachings. With regard to each of these figures, it is assumed that an ion inlet 113, at position 0, corresponds to the left-hand side of the respective graph and that an ion outlet 118, at position L, corresponds to the right-hand side of the plot. It is also assumed that a set of pseudo-waves are applied to electrodes of the respective ion guide so as to urge ions away from the ion inlet and towards the ion outlet. It is to be noted that that absolute magnitude of applied DC voltage is plotted in each of Figs. 6C and 6E. If positively charged ions are introduced into an ion guide or ion separator apparatus that is operated as described herein, then the general movement of ions within the apparatus will be as described if the applied DC voltage profiles are of the general form as the profiles shown in Figs. 6C and 6E. However, if negatively charged ions are introduced into the apparatus, then the general movement of ions within the apparatus will be as described if the applied DC voltage profiles have the general form of mirror images (i.e., as reflected across the horizontal axis) of the profiles shown in Figs. 6C and 6E.

As noted above, a uniform DC field may be applied in opposition to the motion of a set of travelling RF potential wells (i.e., a set of pseudo-waves) in order to isolate ions comprising a particular $m/z$ range within an ion guide (e.g., see Fig. 2A). For example, plot 508 of Fig. 6A depicts a uniform axial DC field as may be created by applying a series of DC voltages to the various individual electrodes of the ion guide wherein the applied voltages linearly increase from an ion inlet towards an ion outlet (i.e., plot 501 of Fig. 6A). As also noted above, a non-uniform axial DC field may be applied in opposition to the motion of the pseudo-waves to cause the ion guide to emit ions from its ion outlet in either increasing or decreasing order of the $m/z$ values (e.g., see Fig. 2C.

Fig. 6B schematically illustrates the variation of the absolute magnitude, $|\vec{E_1}|$, of an applied non-uniform axial electric field, $\vec{E_1}$, that urges ions towards an ion inlet 113 in which the absolute magnitude, $|\vec{E_1}|$, increases towards an ion outlet 118 that is located at position L. As shown schematically in Fig. 6C, the non-uniform axial field may be generated by applying a series of voltages to the various electrodes of the ion guide wherein the magnitude, $|V|$, of the applied voltages increases in accordance with a quadratic function from the ion inlet to the ion outlet, as shown by plot 612 of Fig. 6C. Although the magnitude of the field is shown as increasing linearly in Fig. 6B and the corresponding voltage profile in Fig. 6C is described as a quadratic function, the electric field magnitude may be non-linear and the voltage profile may not necessarily conform to a quadratic function.

With regard to the utilization of an ion guide as an ion separation and sorting device (e.g., Fig. 2C) from which ions are emitted in the order of their $m/z$ values in accordance with the present teachings, the mass spectral resolution, R, of the device may be tailored by utilizing a non-uniform electric field profile as is schematically depicted in Fig. 6D, which may be generated by applying DC voltages to electrodes in accordance with the voltage profile that is shown by segments 504a and 504b in Fig. 6E. Specifically, good mass spectral resolution may be achieved be employing an electric field profile (dashed lines in Fig. 6D) comprising a first segment 503a and a second segment 503b, wherein a magnitude, $|\vec{E_1}|$, of the DC axial field that opposes the ion motion caused by the pseudo-waves increases to a maximum value, $E_{max}$, within the first segment 503a and remains constant at $E_{max}$ within the second segment 503b. The corresponding profile of DC voltages that are applied to the electrodes (solid lines in Fig. 6E) comprises a quadratic section 504a and a linear section 504b (for comparison, dashed line 504 represents the extension of the purely quadratic profile). The position of the junction between segments 503a and 503b in Fig. 6D is denoted by point pc along the axial length of the apparatus and corresponds to the demarcation, denoted by line 505 in Fig. 6E between the quadratic and linear segments of the voltage profile.

Ions are introduced, via ion inlet 113, into an ion guide apparatus that is capable of being configured with travelling RF voltages and static DC voltages as shown in FIGS 6D and 6E. The position of the ion inlet 113 is indicated as position 0 in Figs. 6D and 6E. Radio Frequency (RF) voltage waveforms are applied to the electrodes of the apparatus to create a set of RF travelling waves that create pseudopotential wells that urge ions through the apparatus from the ion inlet 113 to an outlet 118, which is located at position L. At the same time, DC voltages are applied to the electrodes that create an axial field that has the general form indicated by the dashed lines 503a, 503b in Fig. 6D and that urges ions towards the ion inlet 113. After introduction of the ions, the amplitude(s), $A_{RF}$, of the applied RF voltages is/are ramped (i.e., increased) with time. Under such conditions, as described previously herein, packets of ions having different respective $m/z$ values separate from one another and migrate through the apparatus towards the ion outlet 118 at different rates. Fig. 6D schematically depicts the positions, within the apparatus, of three packets of ions 517a, 517b, 517c having mass-to-charge ratios $(m/z)_L$, $(m/z)_M$, and $(m/z)_H$, respectively, where $(m/z)_H > (m/z)_M > (m/z)_L$ at a particular time, $t_1$, during the ramping before any of the ions reach the plateau region 503b of the DC field profile. The instantaneous position, at any particular time, of any such packet of ions represents the axial location, within the apparatus, at which the instantaneous forward-directed urging of the ions of the packet by the pseudo-waves, as generated by the ramped RF amplitudes at the particular time, slightly overcomes the backward-directed urging of the ions by the static electric field along field segment 503a. As discussed previously, these opposed forces cause the ions having the smallest $m/z$ values (e.g., ions of packet 517a) to migrate towards the ion outlet the most rapidly and, thus, these ions arrive at point p1 at time $t_1$. The ions having the greatest $m/z$ values (e.g., ions of packet 517c) migrate the most slowly and, thus, only reach point p3 at time $t_1$. At the same time, the ions having intermediate $m/z$ values (e.g., ions of packet 517b) arrive at point p2.

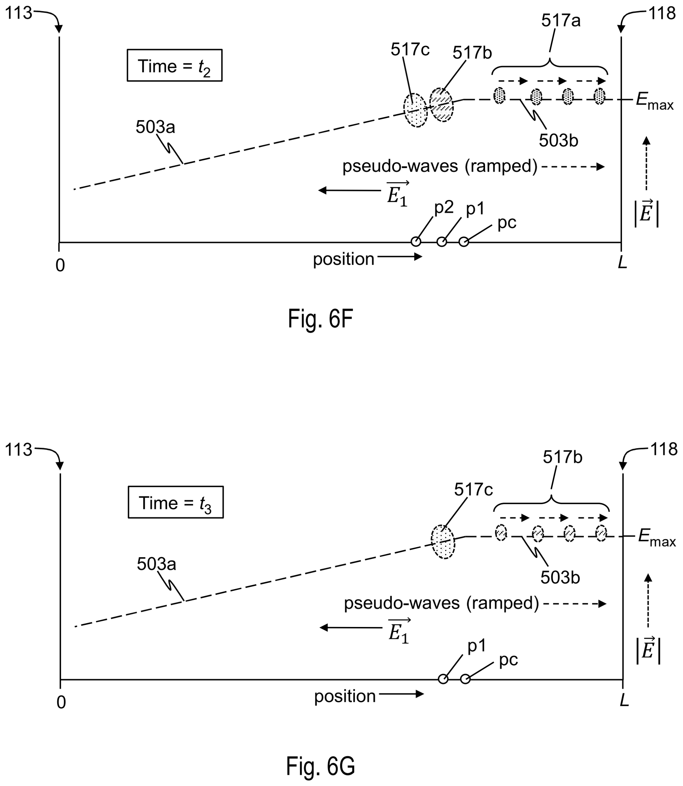

Fig. 6F is a schematic depiction of the positions of the packets of ions of Fig. 6D at a second time, $t_2$, subsequent to time $t_1$, at which the applied RF amplitude(s) has/have been ramped to such an extent that the forward-urging pseudopotential forces on the ions of ion packet 517a first equal and then substantially exceed the maximum backward-urging electrostatic forces corresponding to $E_{max}$ along field-magnitude segment 503b. As a result, multiple portions of the ions of packet 517a are collected by individual travelling pseudopotential wells and are transported downstream thereby, conveyor-belt style, from position pc to the ion outlet 118 at position L. This movement of the ions along the flat field-strength profile 503b is relatively rapid, in comparison to the migration along the ascending voltage profile 503a, since additional ramping of the RF amplitude(s) is not met by a corresponding increase in the backward-urging DC field. Simulations of ion motions indicate that although a portion of the ions of each ion packet may migrate in the reverse direction (i.e., towards the ion inlet 113) within constant field region 503b, they do so less frequently than within the variable field region 503a. The ions are able to efficiently escape from the region 503a in the vicinity of point pc because, on average, the travelling pseudopotential wells move them forward away from point pc and towards the ion outlet 118.

At the same time that ions of packet 517a are transported from position pc to position L, the ions of packets 517b and 517c remain at positions p1 and p2 that are upstream from position pc as a result of the earlier spatial separation of the various packets of ions. Since the forward-urging pseudopotential forces at these positions are merely sufficient to approximately balance (i.e., slightly exceed) the backward-urging DC field forces, the ions in both of these packets continue to migrate relatively slowly towards position pc as the RF amplitude is further ramped until a subsequent time, $t_3$, at which packet 517b reaches position pc. As shown in Fig. 6G, still further ramping of the RF amplitude(s) causes relatively rapid transport of the ions of the packet 517b from position pc to position L. Yet additional ramping causes the ions of packet 517c to be similarly transported (not shown).

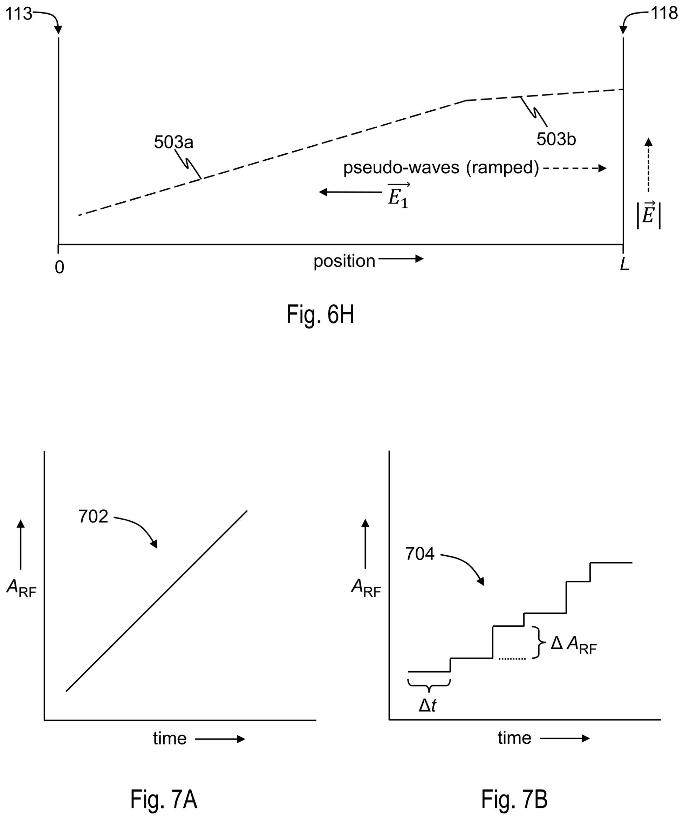

The transport of ions through an ion guide, in the fashion described above with reference to Figs. 6G-6H, causes the emergence, from the ion outlet 118 of the apparatus, of ion packets having different respective $m/z$ values to be spaced apart, in time, by at least the time of flight of the ions from position pc to the ion outlet 118. The axial field profile that opposes the forward motion of the ions need not be exactly as shown in Figs. 6D, 6F and 6G. For example, a voltage profile of the general form shown in Fig. 6H, wherein the profile along the second segment 503b is not constant, may also be usefully employed. Simulations of ion motions and distributions show that the exact form of the electric field in the "constant" region (i.e., the region indicated by voltage profile segment 503b) is not critical. The simulations indicate that, although the best $m/z$ resolution is achieved when the field within the profile segment 503b is constant, small variations have only minor impacts on performance. Regardless, any gradient of the DC field in the profile segment 503b should be less than the gradient of the DC field in the profile region 503a that is used for initial spatial separation of ion species according to *m/z*.

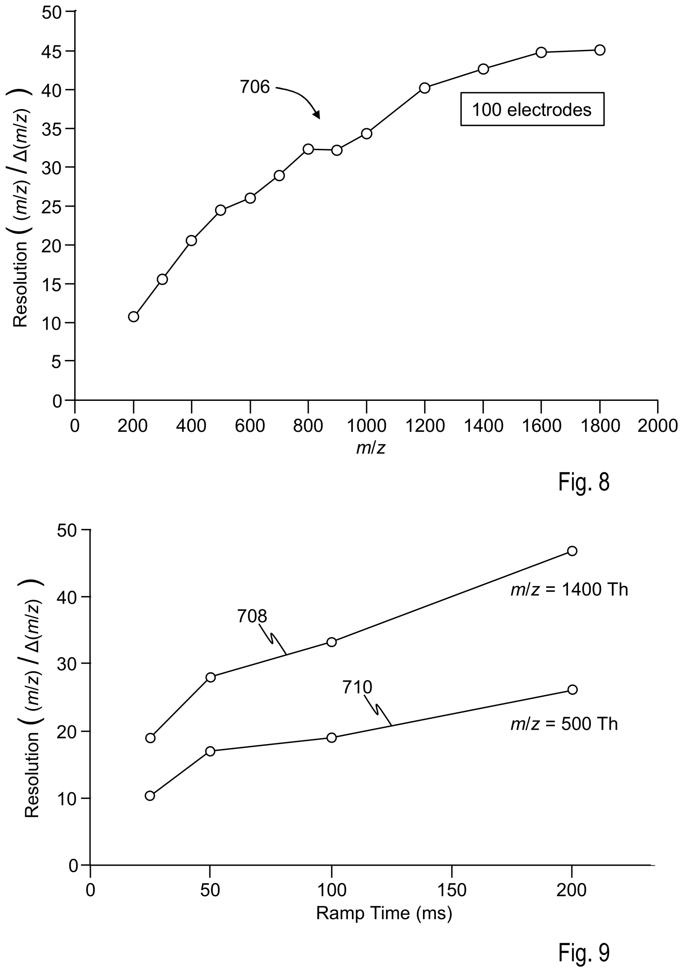

Further, the rate of ramping of the amplitude(s), $A_{RF}$, of the applied RF waveform(s) may be chosen depending on the requirements of a particular measurement. For example, if the ion guide apparatus is employed as a type of mass spectrometer that is operated in a general survey mode, with detection of all ions as they emerge from an ion outlet, then a continuous ramping of $A_{RF}$, as is schematically depicted in Fig. 7A, may be employed. Although Fig. 7A illustrates a linear variation of $A_{RF}$ with time, the variation may alternatively be non-linear, with steeper slopes (i.e., more rapid increase in amplitude) at those times during the ramping at which it is expected that the ions that emerge from the apparatus do not require detection at the maximum achievable resolution and shallower slopes (i.e., slower rate of increase of amplitude) at other times at which it is expected that the emerging ions require a greater level of *m/z* discrimination. For example, Fig. 8 shows the expected achievable mass spectral resolution of ions as a function of *m/z* at a constant RF ramp rate. Fig. 9 shows that greater resolution is expected with longer time durations allotted for completion of the ramping. Fig. 7B illustrates discontinuous, stepped ramping with, for example, longer dwell times, $\Delta t$, at times at which ions of particular interest are expected to emerge from the apparatus, and variable amplitude jumps, $\Delta A_{RF}$, at times at which no ions of interest are expected. Such expected times of emergence of ions of particular *m/z* values may be pre-determined by calibration of the transit times of known standard ions through the apparatus under various conditions.

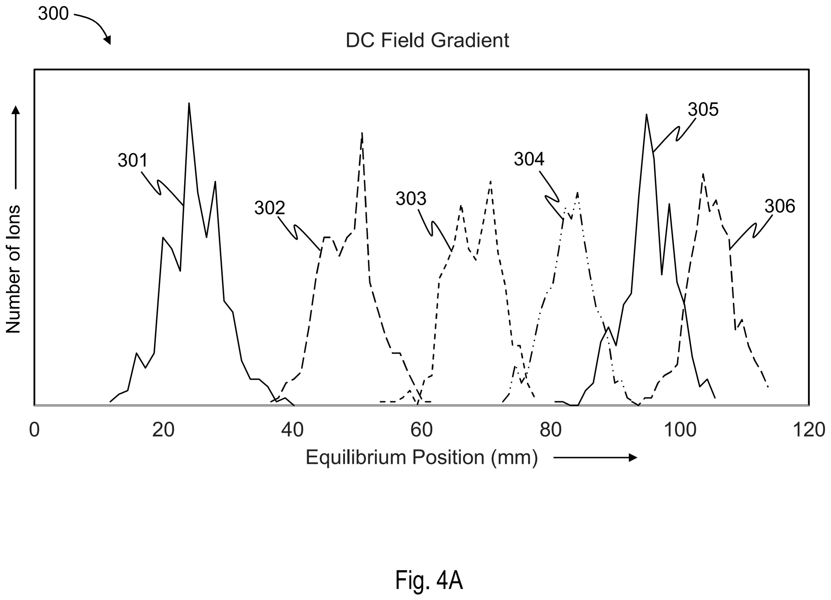

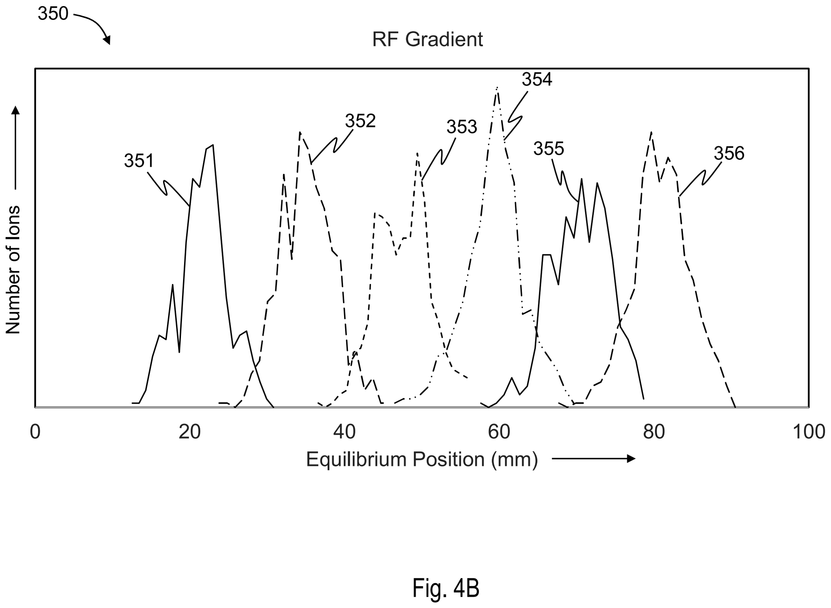

Figs. 4A and 4B represent simulated performance of an ion sorting apparatus that is configured and operated in accordance with the present teachings. The simulated apparatus is 160 mm wide, having 320 electrodes, and 160 pseudopotential wells. The simulation assumed a general separation/equilibration time of 40 msec and assumed operation in the presence of 100 mTorr of nitrogen gas. The plots in Fig. 4A represent the equilibrium positions of ions of various *m/z* ratios within such an apparatus under the application of a DC axial field gradient while, at the same time, under the application of RF waveforms that do not vary across the length of the apparatus. In contrast, the plots in Fig. 4B represent the equilibrium positions of the same ions under application of an RF amplitude gradient across the length of the apparatus in the presence of a uniform DC axial field. Both trace 301 (Fig. 4A) and trace 351 (Fig. 4B) represent ions having a hypothetical *m/z* value of 500 Th. Similarly, traces 302 and 352 represent ions having *m/z* ratio of 600 Th; traces 303 and 353 represent ions having *m/z* ratio of 700 Th; traces 304 and 354 represent ions having *m/z* ratio of 800 Th; traces 305 and 352 represent ions having *m/z* ratio of 900 Th; and traces 306 and 356 represent ions having *m/z* ratio of 1000 Th.

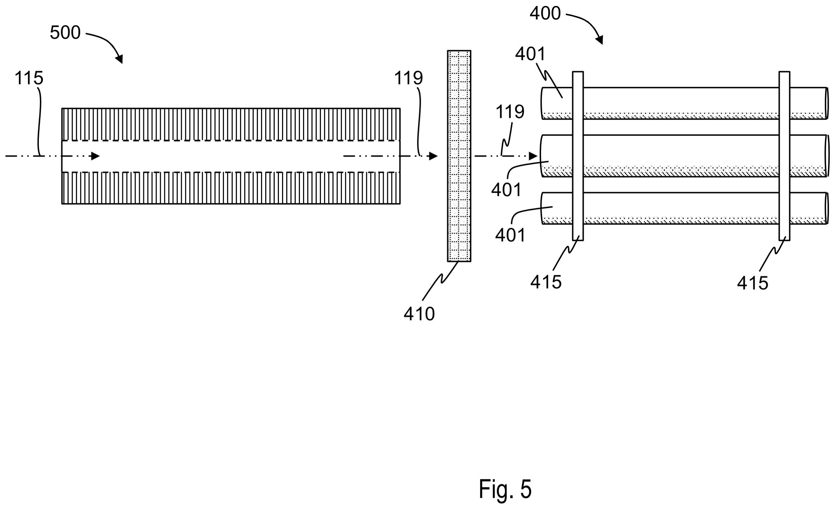

Fig. 5 is a schematic depiction of a portion of a mass spectrometer apparatus that includes an ion filter 400 or other mass spectrometer component arranged in series with an ion transport apparatus 500 that is configured in accordance with the above-described teachings. The apparatus 500 may comprise any of the embodiments that are illustrated in the accompanying drawings or may comprise any non-illustrated apparatus that is operated in accordance with the present teachings including but not limited to: ion guides comprising series of electrodes disposed on or otherwise adhered to parallel plates or wafers (e.g., Figs. 1C, 1D), ion guides comprising series of electrodes disposed on or otherwise adhered to non-parallel plates or wafers (e.g., Fig. 3B), ion tunnels (e.g., Figs. 2A-2C), ion funnels (e.g., Fig. 3A), ion guides having both ion tunnel and ion funnel portions in any number (e.g., Figs. 1A-1B), ion guides in which the series of electrodes comprise series of segments of segmented quadrupole rods; and other ion guides that are capable of providing both an axial field gradient (either end-to-end or across only a portion of the length of the device) as well as a longitudinal gradient (either end-to-end or across only a portion of the length of the device) in RF amplitude or in some other RF parameter.

As illustrated, the apparatus 400 is a quadrupole mass filter that comprises four mutually parallel rod electrodes 401 that are maintained in mutual alignment by support structures 415 that may also provide electrical connections to the rods. In other instances, the apparatus may comprise, without limitation, a multipole ion trap, a multipole fragmentation cell, an ion guide, or a mass analyzer of any type. Preferably, a controllable ion gate 410 is disposed between an ion outlet of the apparatus 500 and an ion inlet of the apparatus 400.

In operation of the system depicted in Fig. 5, the apparatus 500 provides an outlet stream 119 of ions wherein, at any one time, the range of mass-to-charge (*m/z*) values of ions composing the outlet stream 119 is reduced relative to a broader range of *m/z* values that are provided to an inlet end of the apparatus 500 within an inlet ion stream 115 and wherein the range of (*m/z*) values composing the outlet stream 119 changes, over time, to either greater *m/z* values or smaller *m/z* values. In a practical sense, the operation of the apparatus 500 is thus similar to the operation of a conventional mass filter in which the mass-to-charge pass band of the mass filter is scanned with time with the exceptions that the pass band of the apparatus 500 is broader than that of a conventional mass filter and that ions within each pass band range may be accumulated and temporarily stored within the apparatus 500 prior to their release from the apparatus. Thus, the apparatus 500 performs the function of ion accumulation as well as the function of partial pre-separation of ions prior to transferring the ions into the conventional apparatus 400. If the conventional apparatus 400 comprises a quadrupole mass filter, then such mass filter may isolate narrower *m/z* ranges, each isolated range comprising ion species of particular analytical interest.

The ion outlet stream 119 may be either continuous in time or discontinuous in time. The continuity of delivery of the ion outlet stream to the apparatus 400 may be controlled by operation of an ion gate 410, thereby restricting the *m/z* range of ions that may be transferred to the downstream apparatus during any particular time interval. During the times that the ion gate 410 is closed (thereby restricting transmission), new packets of ions from the inlet ion stream 115 may be accumulated and sorted within the upstream apparatus 500 as described herein supra. At such times, the applied RF waveforms and DC voltages are coordinated so as to cause the sorting (e.g., Fig. 2B). At the time that the ion gate 410 is open, the internal RF waveforms and DC voltages are adjusted to permit migration of the accumulated ions out of the apparatus in either increasing order (e.g., Fig. 2C) or decreasing order (e.g., Fig. 3A) of their $m/z$ values.

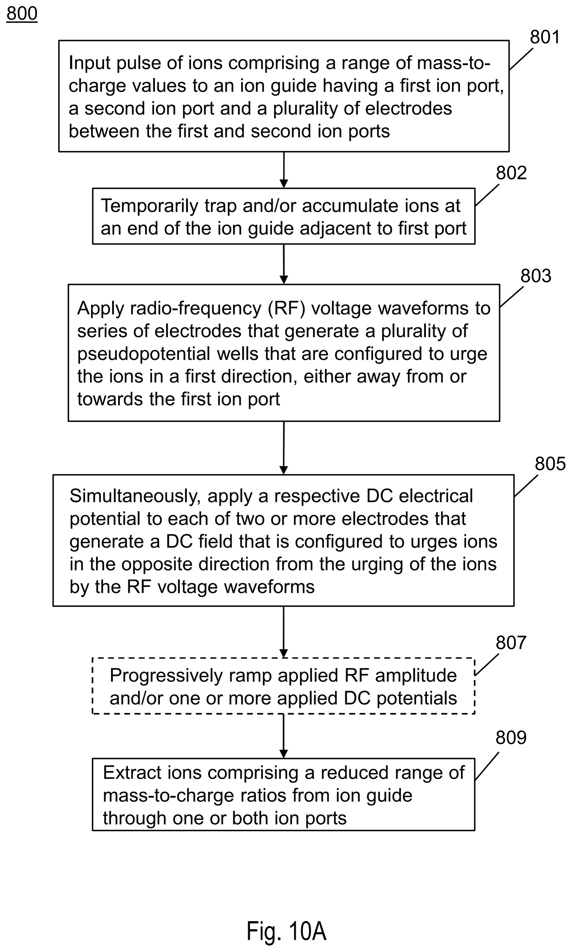

Fig. 10A is a flow diagram of a first method (method 800) of operating an ion guide in accordance with the present teachings. In the first step, step 801 of the method 800, a pulse of ions comprising a range of mass-to-charge (m/z) ratios are input to a first port of two separate ion ports of an ion guide. In step 802, the ions are temporarily trapped and/or accumulated within the ion guide at an end of the ion guide that is adjacent to the first port. The ions may be trapped and/or accumulated thereat by applying DC voltages to electrodes near the first port that temporarily create a temporary, static potential well near that port. In the following step 803 (which may be performed prior to or simultaneously with steps 801 and 802), radio-frequency (RF) voltage waveforms that generate a plurality of pseudopotential wells that are configured to urge the ions in a first direction that is either away from the first ion port and towards the second ion port or, alternatively, towards the first ion port are applied to series of electrodes of the ion guide. In step 805, which occurs simultaneously with step 803, DC electrical potentials that generate a DC field that urges the ions in a direction that is opposite to the urging of the ions by the pseudopotential wells are applied to each of two or more respective electrodes. The DC field may either be uniform (i.e., constant magnitude that does not vary with position) or non-uniform (i.e., having magnitude that is variable with position) across the length of the ion guide. In optional step 807, either the applied RF amplitude(s) and/or the one or more applied DC potentials are progressively ramped over time, in either an increasing or a decreasing fashion, in order to facilitate the differential migration of ions towards the second ion port. Finally, in step 809 ions comprising a range of $m/z$ ratios that is reduced relative to the range of $m/z$ ratios (i.e., is a subset of the range) of the originally input ions, are extracted from the second port of the ion guide. The extracted ions may be inlet to another component of a mass spectrometer apparatus, such as a mass filter, a collision cell or a mass analyzer.

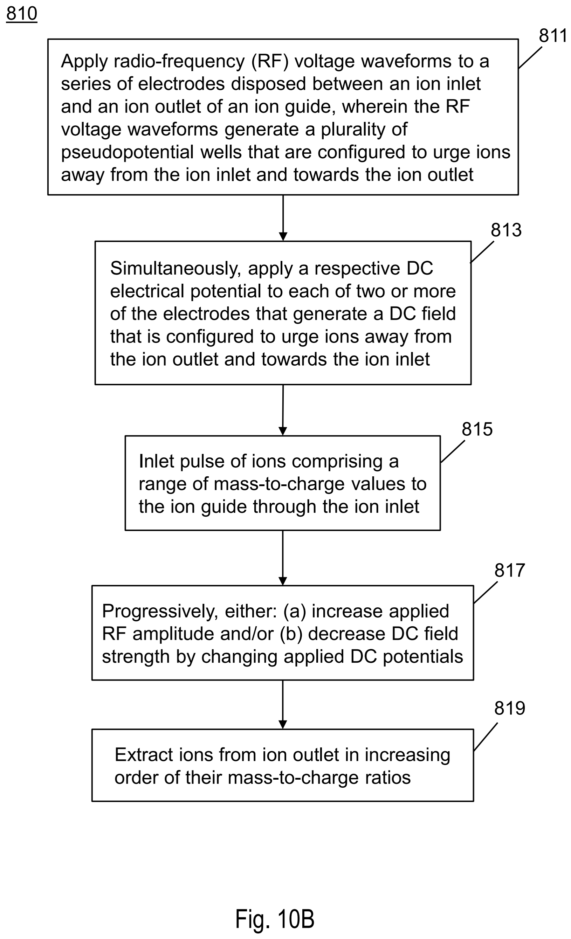

Fig. 10B is a flow diagram of a second method (method 810) of operating an ion guide in accordance with the present teachings. In step 811 of the method 810, radio-frequency (RF) voltage waveforms are applied to a series of electrodes disposed between an ion inlet and an ion outlet of an ion guide, wherein the RF voltage waveforms generate a plurality of pseudopotential wells that are configured to urge ions away from the ion inlet and towards the ion outlet. In step 813, which is executed simultaneously with the execution of step 811, respective DC electrical potentials are applied to each of two or more of the electrodes that generate a DC field that is configured to urge ions away from the ion outlet and towards the ion inlet. The DC field may either be uniform (i.e., constant magnitude that does not vary with position) or non-uniform (i.e., having magnitude that is variable with position) across the length of the ion guide. Subsequently, in step 815, a pulse of ions comprising a range of mass-to-charge values is inlet to the ion guide through the ion inlet. In step 817, either (a) the amplitude(s) of the applied RF waveforms are increased and/or (b) the magnitude of the applied DC field is progressively decreased to cause ions to differentially migrate through the ion guide and towards the ion outlet. In step 819, the ions are extracted from the ion outlet in increasing order of their mass-to-charge ratios. The extracted ions may be inlet to another component of a mass spectrometer apparatus, such as a mass filter, a collision cell or a mass analyzer. According to a variation of the method 810, the step 815 may be executed prior to the steps 811-813 and an additional step of trapping the pulse of ions within a region of the ion guide adjacent to the ion inlet may be executed together with execution of the steps 811-813.

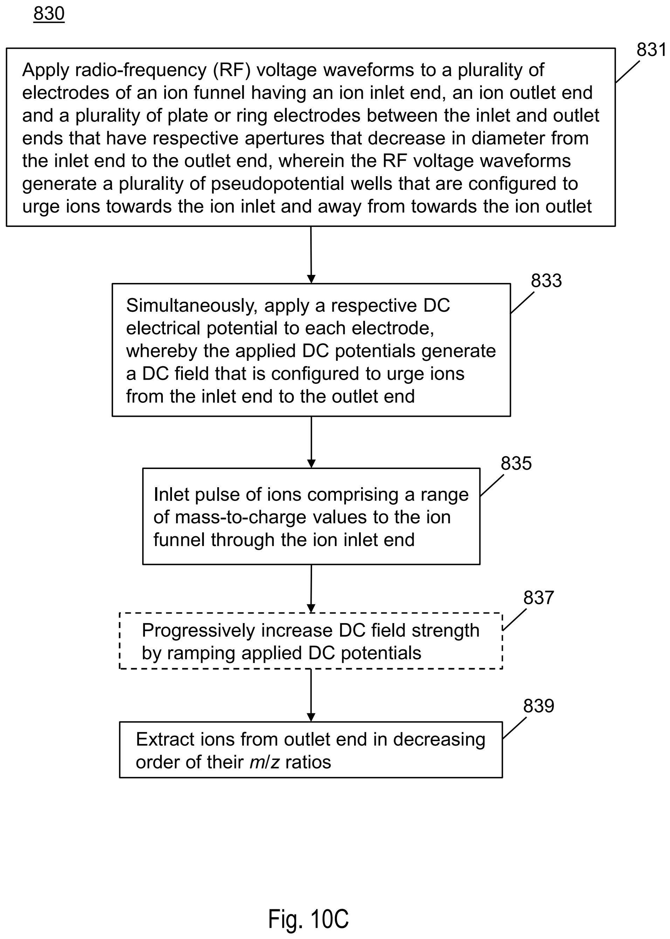

Fig. 10C is a flow diagram of a third method (method 830) of operating an ion guide in accordance with the present teachings. In step 831, radio-frequency (RF) voltage waveforms are applied to a plurality of electrodes of an ion funnel having an ion inlet end, an ion outlet end and a plurality of plate or ring electrodes between the inlet and outlet ends that have respective apertures that decrease in diameter from the inlet end to the outlet end, wherein the RF voltage waveforms generate a plurality of pseudopotential wells that are configured to urge ions towards the ion inlet and away from the ion outlet. In step 833, which is executed simultaneously with the execution of step 831, a respective DC electrical potential is applied to each of the electrodes, whereby the applied potentials generate a DC field that is configured to urge ions away from the inlet end towards the outlet end. Subsequently, in step 835, a pulse of ions comprising a range of mass-to-charge values is inlet to the ion funnel through its ion inlet end. In optional step 837, the magnitude (i.e., strength) of the DC field towards the ion outlet end of the ion funnel may be increased by ramping the DC voltages that are applied to the electrodes in order to facilitate the migration of ions towards the ion outlet end of the ion funnel. Finally, in step 839, ions are extracted from the outlet end of the ion funnel in decreasing order of their $m/z$ ratios. The extracted ions may be inlet to another component of a mass spectrometer apparatus, such as a mass filter, a collision cell or a mass analyzer.

The discussion included in this application is intended to serve as a basic description. The present invention is not intended to be limited in scope by the specific embodiments described herein, which are intended as single illustrations of individual aspects of the invention. Functionally equivalent methods and components are within the scope of the invention, as defined by the claims. Various other modifications of the invention, in addition to those shown and described herein will become apparent to those skilled in the art. For example, a method of generating axial DC fields is described herein in which an end-to-end DC voltage is proportioned (e.g., by using voltage dividers) across a series or stack of electrodes to which RF voltages are also applied. However, many other means of generating axial fields within ion guides have been described, many of which utilize sets of auxiliary electrodes to generate axial fields. Such auxiliary electrodes are often separate from and in addition to a series or stack of main electrodes that receive the RF voltage waveforms. Many alternative methods for generating axial fields or drag fields are described in U.S. Pat. U.S. Pat. No. 7,675,031 (Konicek at al.); U.S. Pat. No. 5,847,386 (Thomson et al.); U.S. Pat. No. 7,985,951 (Okumura et al.; U.S. Pat. No. 7,064,322 (Crawford, et al.); U.S. Pat. No. 7,064,322 (Crawford, et al.); and U.S. Pat. No. 6,417,511 (Russ, IV, et al.). Adaptation of one or more of these known axial field generation techniques to the methods and apparatuses described herein is contemplated and would be within the ability of one of ordinary skill in the art.

As another example of a modification of the above teachings, a variation in the spacing between adjacent ring electrodes 2 (Figs. 1A, 2A, 2B, 2C) or between adjacent electrodes of an array 55 that is supported on a substrate (Fig. 1C) may be used as an additional method for creating a longitudinal spatial gradient in the migrational motive force of an RF-derived travelling wave. For example, the inter-electrode spacing could vary in either a continuous or a discontinuous fashion along the length of an axis of an ion guide or ion separator apparatus in accordance with the present teachings and this variation would create a corresponding variation in the depth of the pseudopotential wells along the length of the device.

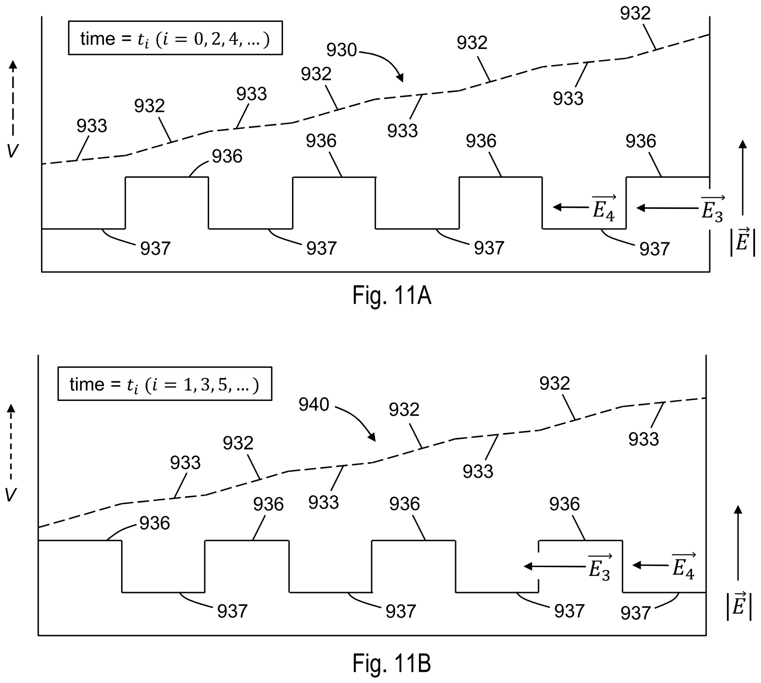

As still another example of a modification of the above teachings, reference is now made to Figs. 11A-11B. The hypothetical voltage plots that are depicted in Figs. 11A-11B, when considered together, provide an example of the application, to an ion guide apparatus, of two separate DC voltage profiles 930, 940 that alternate in time with one another. The left end of each voltage profile corresponds to an ion inlet or "upstream" end of an ion guide apparatus and the right end of each profile corresponds to an ion outlet or "downstream" end of the apparatus. In operation, each DC profile is provided simultaneously with the providing of an RF-modulated travelling-wave that generates RF-induced pseudopotential wells that urge ions towards the downstream end of the apparatus to which the DC profiles are provided. The DC voltage profiles 930, 940 are provided in order to provide forces to ions that are in opposition to the pseudopotential-derived force and that thus urge ions towards the upstream end of the apparatus. Accordingly, the algebraic sign of the slope of the profiles 930, 940 implicitly assumes that the ions are positively charged.

Each voltage profile in Figs. 11A-11B comprises a series of steep-slope segments 932 separated from one another by a series of shallow-slope segments 933. The terms "steep-slope" and "shallow-slope" are used herein in only a relative sense and do not imply any particular numerical values of slopes or of applied voltages. The steep-slope segments of the voltage profile correspond to an upstream-directed electric field vector $\overrightarrow{E_3}$ and the shallow-slope segments correspond to a second upstream-directed electric field vector, $\overrightarrow{E_4}$, where the vector magnitudes are such that $|\overrightarrow{E_4}| < |\overrightarrow{E_3}|$. The voltage profile 930, is applied at time periods, $t_i$, where $i = 0,2,4, ...$ and the voltage profile 940, is applied at time periods where $i = 1,3,5, ...$ Each time the voltage profile changes, a section of the apparatus that was previously provided with the steep-slope profile is subsequently provided with the shallow-slope profile and vice versa.

It may be observed that the change from voltage profile 930 (Fig. 11A) to voltage profile 940 (Fig. 11B) and vice versa is equivalent to either a simple leftward or rightward shift of a single profile, with the shift being equal to the constant spatial width of the profile segments. However, with appropriate finer control of the apportioning of voltages provided to the various individual electrode segments that create the electric fields and to the cycling of the provided voltages to those electrodes, the shift may be caused to be much smaller than the segment widths. In such cases, the positional changes of voltage profiles as well as of the "peaks" 936 and "valleys" 937 of the profile of electric field magnitude may be made to more closely approximate a continuous profile shift and the positional changes of the peaks and valleys 936, 937 may be termed as a "DC travelling wave". The providing of such an upstream-migrating DC travelling wave in conjunction with the simultaneous providing of a downstream-migrating RF travelling wave may facilitate the separation and concentration, at an upstream end of an ion guide apparatus, of certain targeted "heavy" ion species if the rate of upstream migration of the peaks 936 is controlled so as to match the speed of movement of the target ions along the length of the apparatus. Generally, "light" ions will also migrate towards the downstream end of the apparatus under such conditions, but with less efficiency. Conversely, a downstream-migrating DC travelling wave may facilitate the separation of "light" ions and the concentration of those ions at the downstream end of the apparatus and/or their elimination from the apparatus at the ion outlet. Various operational parameters may be controlled as needed.

It should be noted that, with progressively increasing gas pressure above 0.01 Torr, the performance of an ion guide apparatus as described above will be progressively altered. Such changes are anticipated to result from the increasing probability of collisions between ions and gas molecules at increasing gas pressures. With slight increases in pressure above 0.01 Torr, the general characteristics of apparatus performance will continue to be as described above but there will be changes in $m/z$ resolution and in the speed at which ion species migrate through the apparatus. In general, although the greater gas pressure will counteract both the downstream-directed and upstream-directed urgings created by the applied voltages, the pressure effect will be greatest in regard to the RF travelling waves because of a reduction in the pseudopotential well depths with increasing gas pressure. As a result, as the internal pressure increases, the effects of the $m/z$ independent force that is exerted on all ions by the applied DC field will become more pronounced, relative to the urgings exerted by the RF travelling wave. Accordingly, at such gas pressures, the performance of an ion guide apparatus (e.g., $m/z$ resolution, ion residence time) as described above may be advantageously modified, depending on the requirements of a particular measurement, experiment or analytical program, by control of the gas pressure.

As the gas pressure inside an ion guide apparatus increases still further, the ion-molecule collisional effects will become increasingly pronounced, relative to the effects of the applied DC and RF voltages, such that, above some gas pressure that depends on apparatus configuration (e.g., length, cross-sectional area, gas composition, etc.), the collisional effects dominate over the $m/z$ dependent effects of the applied voltages and the apparatus performance tends to resemble an ion mobility separation apparatus, the performance of which is moderated by the applied DC and RF voltages. The performance of such an ion mobility apparatus may be advantageously modified, depending on the requirements of a particular measurement, experiment or analytical program, by controlling the magnitude or magnitudes of one or more applied RF voltage waveforms or by controlling one of more of the frequencies of the applied voltage waveforms.

Accordingly, gas pressure may be considered as an additional parameter to be taken into account during calibration of the performance of an apparatus that is operated as described by the present teachings. More generally, gas pressure is one of many operational parameters, such as apparatus length, apparatus cross-sectional area, gas composition, RF frequencies, etc., that may affect mass spectral results (e.g., mass spectral resolution and measurement speed) but that are difficult to theoretically model, when taken in combination. As a result, apparatus behavior should be calibrated for each particular apparatus prior to operation so that the effects of these parameters are well understood in each instance.

As described herein, most mass spectrometry experiments are inherently inefficient, with the mass filter sometimes eliminating 99% or more of the available ions. To reduce this inefficiency, "ion scheduling" may be performed, which accumulates ions before the ion filter in an ion guide (also referred to as an ion sorter) as described herein. The ions may be separated and released selectively, such that a smaller percentage of ions are ultimately lost at the mass filter.

In some experiments, or during a certain phase of an experiment, it may be beneficial to separate ions primarily based on $m/z$ of the ions. As an illustrative example, a selected precursor ion may have a known $m/z$ (e.g., based on a data dependent survey spectrum) and/or a selected ion $m/z$ range may be known (e.g., based on a data independent experiment). In other experiments, or during a certain phase of an experiment, it may be beneficial to separate ions primarily based on mobility of the ions. As an illustrative example, ions at the same $m/z$ may have different charge states that can be isolated from one another based on mobility. Accordingly, it may be desirable to selectively operate an ion guide in an ion separation mode in which ions are separated primarily based on $m/z$ or an ion mobility separation mode in which ions are separated primarily based on mobility.

In some examples, a controller sets an attribute (e.g., a magnitude, a frequency, a traveling well speed, etc.) of RF voltage waveforms to operate the ion guide in either the $m/z$ separation mode or the ion mobility separation mode. To illustrate, the controller sets the attribute of RF voltage waveforms to be within a first range when the ion guide is to operate in the $m/z$ separation mode or sets the attribute of the RF voltage waveforms to be within a second range when the ion guide is to operate in the ion mobility separation mode. Based on the set attribute of the RF voltage waveforms, the RF voltage waveforms cause spatial separation of the ions within the ion guide (e.g., primarily based on $m/z$ in the $m/z$ separation mode and primarily based on mobility in the ion mobility separation mode) and generate a plurality of moving pseudo-potential wells that exert forces that urge the ions to migrate through the ion guide. For example, in the $m/z$ separation mode, $m/z$-dependent effects of the applied RF voltage waveforms primarily cause the separation of the ions over collisional effects. Alternatively, in the ion mobility separation mode, collisional effects primarily cause the separation of the ions over the $m/z$-dependent effects of the applied RF voltage waveforms (e.g., the ion-molecule collisional effects become increasingly pronounced in the ion mobility separation mode). For example, as ions experience an increased number of collisions per cycle of the RF voltage waveforms (e.g., greater than 1 collision per cycle), ion mobility behavior of the ions is favored over the $m/z$-dependent effects. Alternatively, as ions experience a decreased number of collisions per cycle of the RF voltage waveforms (e.g., less than 1 collision per cycle), $m/z$ behavior of the ions is favored over ion mobility. By setting the attribute of the RF voltage waveforms, a select mode of operation of the ion guide can be set before and/or during an experiment.

Moreover, setting the attribute of the RF voltage waveforms within various ranges allows the ion guide to be operated in the select mode, such as without significant changes to the pressure of gas within the ion guide. Alternatively, in some examples, the gas pressure within the ion guide is set in combination with the attribute of the RF voltage waveforms to selectively operate the ion guide in the $m/z$ separation mode or the ion mobility separation mode. For example, the gas pressure is set within a first pressure range when the ion guide is to operate in the $m/z$ separation mode and the gas pressure is set within a second pressure range when the ion guide is to operate in the ion mobility separation mode. Such setting of the gas pressure in the ion guide may selectively increase the $m/z$-dependent effects for separating ions in the $m/z$ separation mode and/or the collisional effects for separating ions in the ion mobility separation mode.

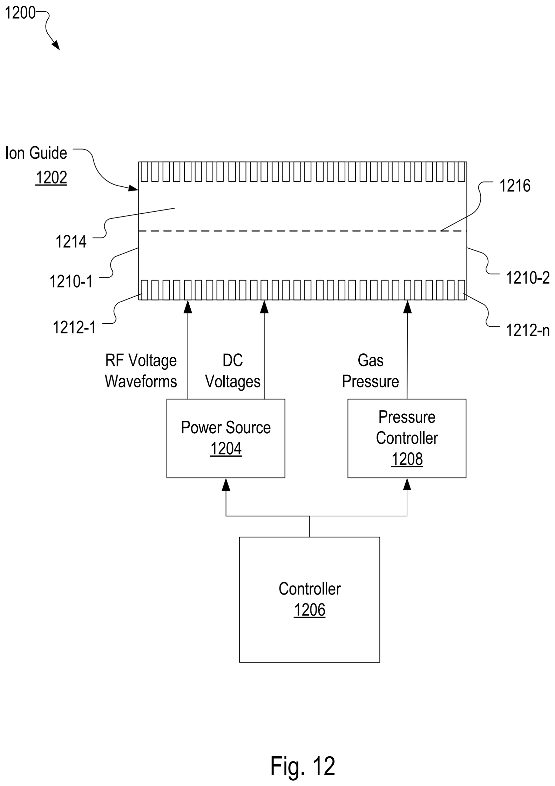

Fig. 12 shows an illustrative configuration 1200 configured to selectively operate an ion guide in an $m/z$ separation mode or an ion mobility separation mode. As shown, configuration 1200 may include an ion guide 1202, a power source 1204, a controller 1206, and a pressure controller 1208. Configuration 1200 may include additional or alternative components as may serve a particular implementation.

Ion guide 1202 may be implemented by any of the ion guides described herein and is depicted in Fig. 12 as a cross-sectional side view. As shown, ion guide 1202 includes a first end 1210-1, a second end 1210-2, and a series of electrodes 1212 (e.g., electrode 1212-1 through electrode 1212-n) disposed between the first end 1210-1 and the second end 1210-2. Electrodes 1212 define an ion occupation volume 1214 within ion guide 1202 and an axis 1216 of the ion guide between the first end 1210-1 and the second end 1210-2. The series of electrodes 1212 may include any suitable number of electrodes (e.g., 100 electrodes).

Power source 1204 is electrically coupled to electrodes 1212 and may be implemented by any number of individually controllable power supplies. The individually controllable power supplies may be configured to generate and apply RF voltage waveforms and DC voltages, which may be applied to various combinations of electrodes 1212 as described herein. As depicted in Fig. 12, power source 1204 may simultaneously apply RF voltage waveforms and DC voltages to the series of electrodes 1212.

Pressure controller1208 is fluidly coupled to ion occupation volume 1214 and is configured to modify a gas pressure within ion occupation volume 1214. Pressure controller 1208 may be implemented by any suitable pumping device (e.g., a vacuum pump) configured to reduce gas pressure within ion occupation volume 1214 and/or gas source configured to increase gas pressure within ion occupation volume 1214. In some examples, pressure controller 1208 is configured to modify the gas pressure by controlling a flow of gas into ion occupation volume 1214 and/or by controlling a flow of gas out of ion occupation volume 1214 such as to increase and/or decrease the gas pressure within ion occupation volume 1214. The pressure controller 1208 may control the gas pressure in the ion occupation volume 1214 to a value in the range of about 0.01 Torr to about 10 Torr. An increase in the gas pressure within ion occupation volume 1214 may provide an increase in a number of collisions of ions migrating through the gas to thereby increase the collisional effects for separation of ions based on mobility of the ions. Alternatively, a decrease in the gas pressure within ion occupation volume 1214 may provide a decrease in a number of collisions of ions migrating through the gas to thereby decrease the collisional effects for separation of ions based on mobility of the ions.

As shown, controller 1206 is coupled to power source 1204 and to pressure controller 1208 and may be configured to control an operation of power source 1204 and/or pressure controller 1208 in any suitable manner. For example, with respect to power source 1204, controller 1206 may specify an attribute (e.g., a magnitude, a frequency, a direction, a type, etc.) of the RF voltage waveforms to cause the RF voltage waveforms having the specified attribute to be applied to the series of electrodes 1212. To illustrate, a frequency of the RF voltage waveforms may be applied in a range of about 100 kilohertz (kHz) to about 1000 kHz. A decrease in the frequency of the RF voltage waveforms may provide an increase in the collisional effects for separation of ions based on mobility of the ions, which may result in the separation of the ions being primarily based on the mobility of the ions. Conversely, an increase in the frequency of the RF voltage waveforms may provide a decrease in the collisional effects for separation of ions based on mobility of the ions, which may result in the separation of the ions being primarily based on $m/z$ of the ions.

With respect to pressure controller 1208, controller 1206 may direct pressure controller 1208 to modify the gas pressure within ion occupation volume 1214. Controller 1206 may be further configured to specify a flow of gas into ion occupation volume 1214 and/or to specify a flow of gas out of ion occupation volume 1214.

Controller 1206 may be implemented by any combination of one or more computing devices. For example, controller 1206 may be implemented by a computing device included in a mass spectrometer system, one or more computing devices configured to be communicatively coupled a mass spectrometer system and/or an ion guide, and/or any other local and/or remote computing devices as may serve a particular implementation.

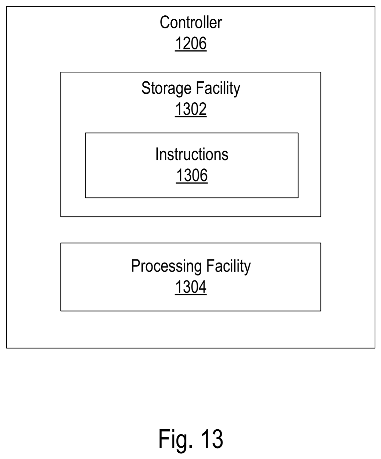

Fig. 13 shows illustrative components of controller 1206. For example, controller 1206 may include, without limitation, a storage facility 1302 and a processing facility 1304 selectively and communicatively coupled to one another. Facilities 1302 and 1304 may each include or be implemented by hardware and/or software components (e.g., processors, memories, communication interfaces, instructions stored in memory for execution by the processors, etc.). In some examples, facilities 1302 and 1304 may be distributed between multiple devices and/or multiple locations as may serve a particular implementation. For example, facilities 1302 may be distributed between one or more local compute resources and one or more remote compute resources communicatively coupled to the local compute resources by way of a network.

Storage facility 1302 may maintain (e.g., store) executable data used by processing facility 1304 to perform any of the operations described herein. For example, storage facility 1302 may store instructions 1306 that may be executed by processing facility 1304 to perform any of the operations described herein. Instructions 1306 may be implemented by any suitable application, software, code, and/or other executable data instance. Storage facility 1302 may also maintain any data acquired, received, generated, managed, used, and/or transmitted by processing facility 1304.

Processing facility 1304 may be configured to perform (e.g., execute instructions 1306 stored in storage facility 1302 to perform) various processing operations described herein. It will be recognized that the operations and examples described herein are merely illustrative of the many different types of operations that may be performed by processing facility 1304. In the description herein, any references to operations performed by controller 1206 may be understood to be performed by processing facility 1304 of controller 1206. Furthermore, in the description herein, any operations performed by controller 1206 may include controller 1206 directing or instructing another computing system, device, or apparatus to perform the operations.

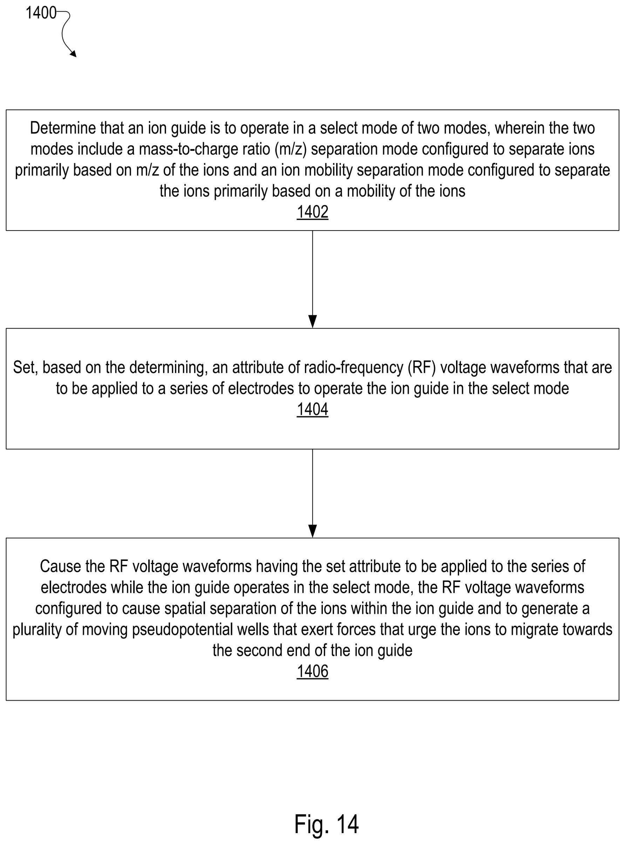

Fig. 14 shows an illustrative method 1400 for selectively setting a mode of operation of an ion guide (e.g., ion guide 1202) that may be performed by controller 1206. While Fig. 14 shows illustrative operations according to one embodiment, other embodiments may omit, add to, reorder, and/or modify any of the operations shown in Fig. 14.

At operation 1402, controller 1206 determines that the ion guide is to operate in a select mode of two modes, wherein the two modes include an $m/z$ separation mode configured to separate ions within the ion occupation volume primarily based on $m/z$ of the ions and an ion mobility separation mode configured to separate the ions within the ion occupation volume primarily based on a mobility of the ions. In some examples, determining that the ion guide is to operate in the select mode is based on a user input designating the select mode. To illustrate, a user device (e.g., a computing device) may be communicatively coupled with controller 1206 such that controller 1206 may receive a user input designating the select mode via the user device. In some examples, the user input selects between the two modes. Additionally or alternatively, the user input may specify one or more attributes of the RF voltage waveforms and/or a gas pressure of the ion guide.

In some other examples, the determining the select mode of operation of the ion guide is performed automatically by controller 1206, such as without input by a user. For example, controller 1206 may determine one or more conditions associated with an analysis of a sample that includes ions that are received by the ion guide and select, based on the one or more conditions, the mode of operation in which to operate the ion guide. In instances where controller 1206 identifies a condition that favors $m/z$ separation over ion mobility separation, controller 1206 may select the $m/z$ separation mode. Alternatively, in instances where controller 1206 identifies a condition that favors ion mobility separation over $m/z$ separation, controller 1206 may select the ion mobility separation mode.

As an illustrative example, the ion guide may be determined to operate in the select mode based on determining an attribute of a sample containing ions to be received by the ion guide. The attribute of the sample may include one or more of an $m/z$ range, a charge state, a mobility, a chromatographic retention time or retention index, or collisional cross-sections of ions included in the sample. If the sample includes multiple ions having the same $m/z$ range at different charge states, controller 1206 may determine to operate the ion guide in the ion mobility separation mode. Alternatively, if the sample does not include multiple ions having the $m/z$ range, controller 1206 may determine to operate the ion guide in the $m/z$ separation mode. Still other suitable configurations may be used to determine the operating mode of the ion guide. For example, when an $m/z$ of an ion selected to be isolated and/or a desired $m/z$ window is known, controller 1206 may determine to operate in the $m/z$ separation mode.

At operation 1404, controller 1206 sets, based on the determining, an attribute of RF voltage waveforms that are to be applied to the series of electrodes (e.g., electrodes 1212) to operate the ion guide in the select mode. The attribute of the RF voltage waveforms may include, but is not limited to, one or more of a magnitude of the RF voltage waveforms, a range of magnitudes of the RF voltage waveforms, a frequency of the RF voltage waveforms, a range of frequencies of the RF voltage waveforms, a direction of the RF voltage waveforms, a speed of the RF voltage waveforms, electrodes on which to apply the RF voltage waveforms, or a type of the RF voltage waveforms, such as sinusoidal waveforms, pulsed waveforms, stepped waveforms, sawtooth waveforms, etc.

In some examples, the setting comprises setting the attribute of the RF voltage waveforms to be within a first range when the ion guide is to operate in the $m/z$ separation mode and setting the attribute of the RF voltage waveforms to be within a second range when the ion guide is to operate in the ion mobility separation mode. To illustrate, the attribute may include a range of RF voltage waveform frequencies (e.g., about 100 kHz to about 1000 kHz) such that the first range of the attribute of the RF voltage waveforms includes a first range of RF voltage waveform frequencies to operate in the $m/z$ separation mode and the second range of the attribute of the RF voltage waveforms includes a second range of RF voltage waveform frequencies to operate in the ion mobility separation mode. In such instances, the second range of RF voltage waveform frequencies are lower than the first range of RF voltage waveform frequencies.

At operation 1406, controller 1206 causes the RF voltage waveforms having the set attribute to be applied to the series of electrodes while the ion guide operates in the select mode. The application of the RF voltage waveforms is configured to cause spatial separation of the ions within the ion guide and to generate a plurality of moving pseudopotential wells that exert forces that urge the ions to migrate towards the second end of the ion guide. Causing the RF voltage waveforms having the set attribute to be applied to the series of electrodes may include applying the RF voltage waveforms having the set attribute to a first series of electrodes disposed on a surface of a first substrate plate or wafer and to a second series of electrodes disposed on a surface of a second substrate plate or wafer, wherein the first substrate plate or wafer is substantially parallel to the second substrate plate or wafer and separated therefrom by a gap.

In the $m/z$ separation mode, the applied RF voltage waveforms generate a plurality of moving pseudopotential wells that exert $m/z$-dependent forces that urge the ions to migrate from a first end (e.g., first end 1210-1) towards a second end (e.g., second end 1210-2) of the ion guide. In some examples, controller 1206 further causes, simultaneously with the application of the RF voltage waveforms, a set of two or more DC electrical potentials to be applied either to the series of electrodes or to a set of auxiliary electrodes that generate forces on the ions within the ion guide that are independent of $m/z$

and that urge the ions to migrate from the second end to the first end. The combination of opposed forces may then be used to spatially sort ions within the ion guide. To illustrate, in the case of ions having the smallest $m/z$ values, for which the force attributable to the RF travelling wave dominates the DC-field force, the movement will be in the direction of the travelling wave. In the case of ions having the greatest $m/z$ values, for which the DC axial field dominates, the movement will be opposite to the direction of the travelling wave. For ions having a particular critical $m/z$ value, RF-derived and DC-potential gradient-derived forces will balance such that ions will not move in either direction and will be trapped within a specific region within the ion guide, where the position of the specific region depends on the particular $m/z$ value and on the applied voltages. Accordingly, by coordinated application of an RF field and a static DC field, the ion guide may be configured so that low-m/z-value ions and high-m/z-value ions are caused to migrate in opposite directions, while, at the same time, ions having the critical $m/z$ value are trapped at a trapping location within the ion guide to thereby spatially separate ions along the length of the ion guide primarily based on $m/z.$

In some examples, a gradient may be applied either to the RF field, the DC field or both the RF and DC fields. In such cases, the trapping location will become $m/z$ dependent, thereby both trapping and spatially separating ions based on their respective $m/z$ values. In some examples, applying the two or more DC electrical potentials comprises applying electrical potentials that generate a static, uniform DC field within the ion guide, whereby ions having a particular $m/z$ are caused to accumulate within the ion guide and ions having other mass-to-charge ratios are caused to migrate out of the ion guide. Additionally or alternatively, a magnitude of the applied DC electrical potential and/or an amplitude of the applied RF voltage waveforms may be ramped so as to cause the accumulated ions having a particular $m/z$ to migrate out of the ion guide through either the first or second end.

In the ion mobility separation mode, ions are spatially separated primarily based on the mobility of the ions within an ion occupation volume (e.g., ion occupation volume 1214) of the ion guide. As ions move under the influence of the applied fields and collisions with background gas within the ion occupation volume 1214, the ions spatially segregate and migrate to a stable trapping location. The ions migrate through the gas flow region of the ion occupation volume in accordance with ion mobility properties of the ions and spatially separate from each other during the migration (e.g., due to collisions with the gas in the ion occupation volume). For example, larger ions (e.g., ions having a greater collisional cross-section) may have a greater impact of collisions and travel more slowly under the influence of the applied fields than smaller ions (e.g., ions having a smaller collisional cross-section), which results in a separation of ions. The trapping location is at least partially mobility dependent, and the ions thereby become trapped and spatially separated based in part on their respective mobility attributes. For example, ions with greater mobility may advance further into the ion guide (i.e., traveling further from first end 1210-1 to second end 1210-2) than ions with lower mobility. This separation allows ions exiting the ion occupation volume of the ion guide to have a different range of ion mobilities relative to other ions exiting the ion occupation volume.

In other embodiments, the ion mobility separation mode can additionally introduce a flow of gas with the ion occupation volume to augment the size of the mobility separation effect. For example, the ion occupation volume may have a flow of gas, such as in a first direction, and an electric field gradient (e.g., caused by the RF voltage waveforms and/or the DC electrical potentials), such as in a second direction that is different than the first direction. In some examples, the flow of gas can be created by operation of the pressure controller 1208.

Accordingly, in the $m/z$ separation mode, the $m/z$-dependent effects of the applied RF voltage waveforms cause separation of the ions within the ion guide more than the collisional impacts related to the mobility of the ions. In some examples, an increase in the applied RF voltage waveform frequencies may decrease the collisional impacts related to mobility of the ions to increase separation of the ions based on $m/z.$ The RF voltage waveform frequencies may thereby be applied in the first range of RF voltage waveform frequencies in the $m/z$ separation mode to cause separation of the ions within the ion guide based on $m/z$ more than ion mobility. For example, the RF voltage waveform frequencies applied in the $m/z$ separation mode may cause no separation of the ions based on mobility of the ions up to a portion of separation of the ions based on mobility that is less than a portion of separation of the ions based on $m/z.$

Alternatively, in the ion mobility separation mode, the collisional impacts related to the mobility of the ions cause separation of the ions within the ion guide more than the $m/z$-dependent effects of the applied RF voltage waveforms. In some examples, a decrease in the applied RF voltage waveform frequencies may increase the collisional impacts related to mobility of the ions to increase separation of the ions based on mobility. The RF voltage waveform frequencies may thereby be applied in the second range of RF voltage waveform frequencies in the ion mobility separation mode to cause separation of the ions within the ion guide based on mobility more than $m/z.$ For example, the RF voltage waveform frequencies applied in the ion separation mode may cause a portion of separation of the ions based on mobility that is more than a portion of separation of the ions based on $m/z.$

In some examples, the attribute of the RF voltage waveforms may be adjusted to switch between the $m/z$ separation mode and the ion mobility separation mode. For example, the frequencies of the RF voltage waveforms applied to the series of electrodes of the ion guide may be decreased to switch from the $m/z$ separation mode to the ion mobility separation mode and/or the frequencies of the RF voltage waveforms may be increased to switch from the ion mobility separation mode to the $m/z$ separation mode. As an illustrative example, the ion guide may be configured to operate in the *m/z* separation mode such as to determine an *m/z* range of ions included in a sample. If multiple ions included in the sample have the same *m/z* range and different charge states, controller 1206 may adjust (e.g., decrease) the frequencies of the RF voltage waveforms from a first range to a second range to switch operation of the ion guide from the *m/z* separation mode to the ion mobility separation mode. The ion guide may then separate ions having the same *m/z* range and different charge states based on mobility of the ions.

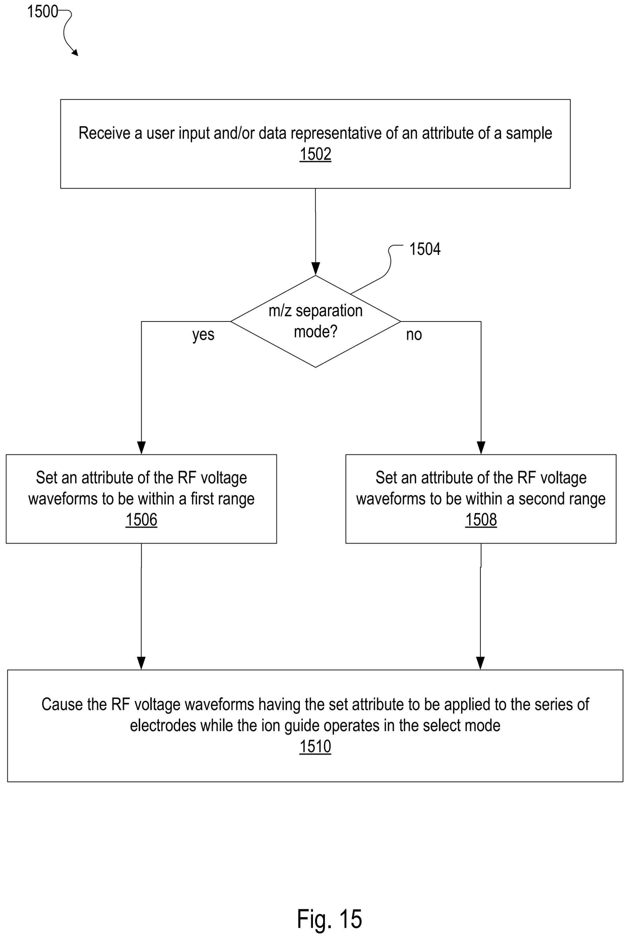

Fig. 15 shows another illustrative method 1500 for selectively setting a mode of operation of an ion guide (e.g., ion guide 1202) that may be performed by controller 1206. While Fig. 15 shows illustrative operations according to one embodiment, other embodiments may omit, add to, reorder, and/or modify any of the operations shown in Fig. 15.

At operation 1502, controller 1206 receives a user input and/or data representative of an attribute of a sample. For example, the user input may designate a select mode of the *m/z* separation mode or the ion mobility separation mode in which to operate the ion guide. Additionally or alternatively, the user input may designate an attribute of RF voltage waveforms to be applied to the series of electrodes of the ion guide and/or an attribute of a sample containing ions to be received by the ion guide, such as an *m/z* range, a charge state, a mobility, and/or a collisional-cross section of the ions included in the sample. Additionally or alternatively, controller 1206 may receive data representative of the attribute of the sample, such as that the sample includes multiple ions having the same *m/z* range and different charge states. The data could be retrieved, for example, from a database including analytes or other sample components and associated attributes for each analyte or sample component.

At operation 1504, controller 1206 determines whether to operate the ion guide in an *m/z* separation mode configured to separate ions within the ion occupation volume primarily based on *m/z* of the ions. For example, in instances where the user input designates the *m/z* separation mode and/or the sample does not include multiple ions having the same *m/z* range, controller 1206 may determine to operate the ion guide in the *m/z* separation mode. Alternatively, in instances where the user input designates the ion mobility separation mode and/or the sample does include multiple ions having the same *m/z* range, controller 1206 may determine to operate the ion guide in the ion mobility separation mode configured to separate the ions within the ion occupation volume primarily based on a mobility of the ions.

When controller 1206 selects the *m/z* separation mode (e.g., yes, at operation 1504), at operation 1506, controller 1206 sets an attribute of the RF voltage waveforms to be within a first range. For example, the frequency of the RF voltage waveforms may be set to be within the first range (e.g., about 400 kHz to about 1000 kHz, about 500 kHz to about 1000 kHz, about 600 kHz to about 1000 kHz, about 700 kHz to about 1000 kHz, about 800 kHz to about 1000 kHz, etc.). Alternatively, when controller 1206 does not select the *m/z* separation mode (e.g., no, at operation 1504), at operation 1508, controller 1206 may select to operate the ion guide in the ion mobility separation mode and set the attribute of the RF voltage waveforms to be within a second range. For example, the frequency of the RF voltage waveforms may be set to be within the second range (e.g., about 100 kHz to about 1000 kHz, about 100 kHz to about 800 kHz, about 100 kHz to about 700 kHz, about 100 kHz to about 600 kHz, about 100 kHz to about 500 kHz, etc.) that is lower than the first range.

At operation 1510, controller 1206 causes the RF voltage waveforms having the set attribute to be applied to the series of electrodes while the ion guide operates in the select mode. For example, controller 1206 may cause a power source (e.g., power source 1204) electrically coupled with the series of electrodes to apply the RF voltage waveforms having the set attribute. The RF voltage waveforms are configured to cause spatial separation of the ions within the ion guide and to generate a plurality of moving pseudopotential wells that exert forces that urge the ions to migrate towards the second end of the ion guide. In the *m/z* separation mode, the RF voltage waveforms are configured to cause separation of the ions primarily based on *m/z* of the ions. In the ion mobility separation mode, the RF voltage waveforms are configured to cause separation of the ions primarily based on mobility of the ions. For example, the lower RF voltage waveform frequencies in the second range may increase the collisional impacts of the ions to thereby increase separation of the ions based on mobility in the ion mobility separation mode.

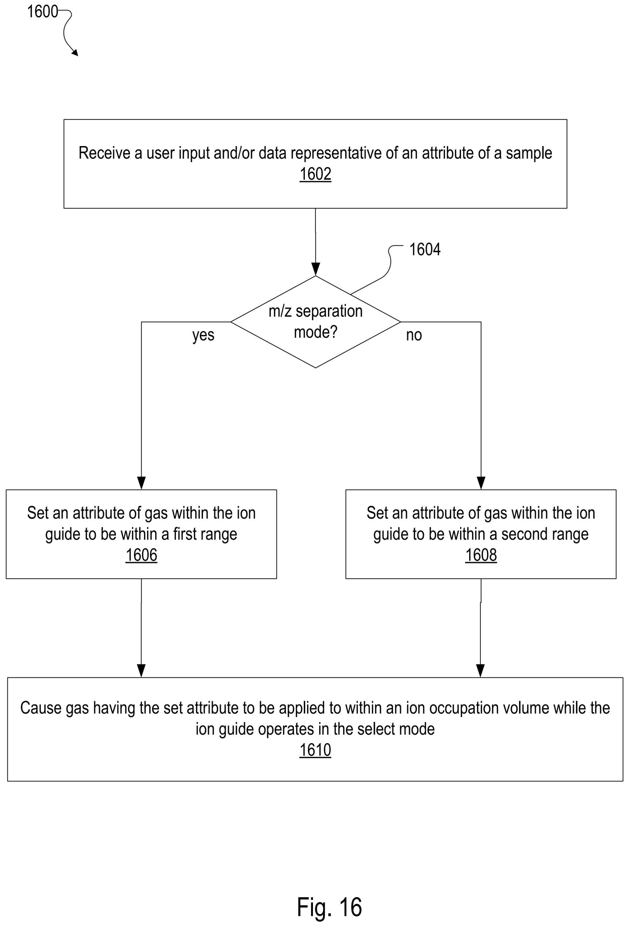

In some examples, the ion guide includes a gas within the ion occupation volume (e.g., at a gas pressure greater than or equal to 0.01 Torr, such as from about 0.01 Torr to about 10 Torr) such that a combination of an attribute of the gas in the ion occupation volume and an attribute of the RF voltage waveforms may be set to selectively operate the ion guide in the *m/z* separation mode or the ion mobility separation mode. As an illustrative example, Fig. 16 shows an illustrative method 1600 for selectively setting an attribute of the gas based on a mode of operation of an ion guide (e.g., ion guide 1202) that may be performed by controller 1206. While Fig. 16 shows illustrative operations according to one embodiment, other embodiments may omit, add to, reorder, and/or modify any of the operations shown in Fig. 16.

At operation 1602, controller 1206 receives a user input and/or data representative of an attribute of a sample. For example, the user input may designate a select mode of the *m/z* separation mode or the ion mobility separation mode in which to operate the ion guide. Additionally or alternatively, the user input may designate an attribute of RF voltage waveforms to be applied to the series of electrodes of the ion guide and/or an attribute of a sample containing ions to be received by the ion guide, such as an *m/z* range of the ions included in the sample. Additionally or alternatively, controller 1206 may receive data representative of the attribute of the sample, such that the sample includes multiple ions having the same *m/z* range.

At operation 1604, controller 1206 determines whether to operate the ion guide in an *m/z* separation mode configured to separate ions within the ion occupation volume primarily based on *m/z* of the ions. For example, in instances where the user input designates the *m/z* separation mode and/or the sample does not include multiple ions having the same *m/z* range, controller 1206 may determine to operate the ion guide in the *m/z* separation mode. Alternatively, in instances where the user input designates the ion mobility separation mode and/or the sample does include multiple ions having the same *m/z* range, controller 1206 may determine to operate the ion guide in the ion mobility separation mode configured to separate the ions within the ion occupation volume primarily based on a mobility of the ions.

When controller 1206 selects the *m/z* separation mode (e.g., yes, at operation 1604), at operation 1606, controller 1206 sets an attribute of the gas (e.g., pressure of the gas, a speed of the flow of the gas, a type of gas, a direction of the flow of the gas, etc.) within the ion occupation volume of the ion guide to be within a first range (e.g., in addition to setting the attribute of the RF voltage waveforms to be within the first range of RF voltage waveforms). For example, the gas pressure of the gas may be set to be within the first range (e.g., from about 0.1 Torr to about 1 Torr, about 0.1 Torr to about 0.5 Torr, about 0.1 Torr to about 0.2 Torr, etc.). Alternatively, when controller 1206 does not select the *m/z* separation mode (e.g., no, at operation 1604), at operation 1608, controller 1206 may select to operate the ion guide in the ion mobility separation mode and set the attribute of the gas to be within a second range (e.g., in addition to setting the attribute of the RF voltage waveforms to be within the second range of RF voltage waveforms). For example, the gas pressure of the gas may be set to be within the second range (e.g., from about 0.2 Torr to about 10 Torr, from about 0.5 Torr to about 10 Torr, from about 1 Torr to about 10 Torr, etc.) that includes gas pressures that are higher than gas pressures in the first range. In some examples, the ion guide does not employ actively flowing gas within the ion occupation volume (i.e., does not impart a non-zero average velocity to the buffer or background gas with respect to the ion occupation volume). In such examples, the ability to adjust certain "static" attributes unrelated to active gas flow such as gas pressure and gas type can still advantageously enable selection between ion mobility and *m/z* separation modes as taught herein.

At operation 1610, controller 1206 causes gas having the set attribute to be applied to the ion occupation volume while the ion guide operates in the select mode. For example, controller 1206 may cause a pressure controller (e.g., pressure controller 1208) fluidly coupled with the ion occupation volume to apply the gas having the set attribute. The gas having the set attribute is configured to cause separation of the ions within the ion guide in addition to the applied RF voltage waveforms. For example, higher gas pressures in the second range may increase the collisional impacts of the ions to thereby increase separation of the ions based on mobility. In some instances, higher gas pressures may further provide separation of ions with respect to a charge state of the ions.

In some examples, one or both of the attribute of the gas or the attribute of the RF voltage waveforms may be adjusted to switch between the *m/z* separation mode and the ion mobility separation mode. For example, the gas pressure of gas applied to the ion occupation volume of the ion guide may be increased to switch from the *m/z* separation mode to the ion mobility separation mode and/or the gas pressure may be decreased to switch from the ion mobility separation mode to the *m/z* separation mode. Accordingly, adjusting the gas pressure may switch operation modes of the ion guide with little to no change in the RF voltage waveforms. Additionally or alternatively, the frequencies of the RF voltage waveforms applied to the series of electrodes of the ion guide may be decreased to switch from the *m/z* separation mode to the ion mobility separation mode and/or the frequencies of the RF voltage waveforms may be increased to switch from the ion mobility separation mode to the *m/z* separation mode. Additionally or alternatively, the speed of the RF voltage waveforms applied to the series of electrodes of the ion guide may be increased to switch from the *m/z* separation mode to the ion mobility separation mode and/or the speed of the RF voltage waveforms may be decreased to switch from the ion mobility separation mode to the *m/z* separation mode. Accordingly, adjusting the RF voltage waveform frequencies and/or RF traveling wave speeds may switch operation modes of the ion guide with little to no change in the gas pressure. In some examples, controller 1206 may vary the gas pressure and/or the RF voltage waveforms over time in either of the *m/z* separation mode or the ion mobility separation mode.

In some examples, the ion guide may first be operated in the *m/z* separation mode such as to determine an *m/z* range and/or a relationship between *m/z,* charge, and mobility of ions included in a sample received by the ion guide. The ion guide may then be switched to be operated in the ion mobility separation mode such as to isolate ions having the same *m/z* and different charge states of ions included in the sample (e.g., and/or another sample having the same ions included in the sample). In some instances, ions included in the sample may be passed through a mass filter prior to being received by the ion guide such as to filter ions included in the sample to a select *m/z* range for subsequent separation based primarily on ion mobility by the ion guide. In such instances, an MS/MS spectra having an improved resolution may be achieved relative to ions separated exclusively by *m/z*.

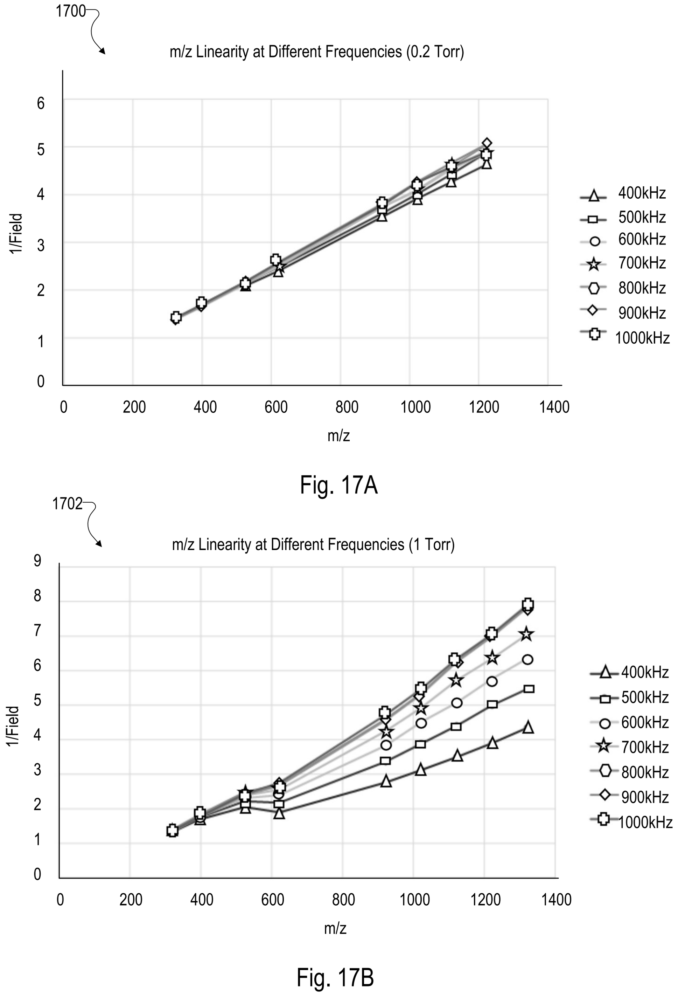

Figs. 17A and 17B show results of a simulation of illustrative *m/z* linearities when various RF voltage waveform frequencies are applied to the series of electrodes (e.g., electrodes 1212) within an ion guide (e.g., ion guide 1202).

Fig. 17A shows illustrative *m/z* linearities 1700 of the simulation plotted as a function of *m/z* along the X axis and 1/Field (e.g., a value representative of the inverse of a strength of the DC Field at which an ion is eluted from the ion guide) along the Y axis. In the simulation, the gas pressure of the gas within the ion occupation volume was set to 0.2 Torr, and multiple RF voltage waveform frequencies ranging from 400 kHz to 1000 kHz were applied to the series of electrodes of the ion guide to obtain the different curves. As shown, RF voltage waveforms having higher frequencies provide a more linear function of *m/z* than RF voltage waveforms having lower frequencies, which may indicate that RF voltage waveforms having higher frequencies provide more *m/z*-dependent effects to separate ions based on *m/z* (e.g., higher RF voltage waveform frequencies reduce an overall impact of collisions).

Fig. 17B shows illustrative *m/z* linearities 1702 of the simulation plotted as a function of *m/z* along the X axis and 1/Field along the Y axis. In the simulation, the gas pressure of the gas within the ion occupation volume was set to 1 Torr and multiple RF voltage waveform frequencies ranging from 400 kHz to 1000 kHz were applied to the series of electrodes of the ion guide to obtain the different curves. As shown, RF voltage waveforms having lower frequencies provide a less linear function of *m/z* than RF voltage waveforms having higher frequencies and can even develop a pronounced inflection point, which may indicate that RF voltage waveforms having lower frequencies provide more collisional effects to separate ions based on mobility of the ions. Additionally, the increased gas pressure of the gas within the ion occupation volume further increased the collisional effects to further enhance separation of ions based on mobility of the ions. The simulations shown in Figs. 17A and 17B may further indicate that a change in the RF voltage waveform frequencies may have more of an impact on m/z-based separation and ion mobility-based separation at higher gas pressures. For instance, each curve obtained with the gas pressure set to 0.2 Torr (e.g., Fig. 17A) has a linear fit R-squared value greater than 0.999, while the curves obtained with the gas pressure set to 1 Torr (e.g., Fig. 17B) had lower R-squared values indicative of greater non-linearity. Deviations from the linear relationship are indicative of a greater mobility component contributing to ion separation. For example, the curve associated with the RF voltage waveform frequency of 400 kHz and the gas pressure set to 1 Torr has an R-squared value of 0.9705, while the curve associated with the RF voltage waveform frequency of 1000 kHz and the gas pressure set to 1 Torr has an R-squared value of 0.9913. Accordingly, the RF voltage waveform frequencies may be adjusted from the second range to the first range while the gas pressure remains in the second range to switch from the ion mobility separation mode to the *m/z* separation mode or vice versa.

In some examples, a computer program product embodied in a non-transitory computer-readable storage medium may be provided. In such examples, the non-transitory computer-readable storage medium may store computer-readable instructions in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

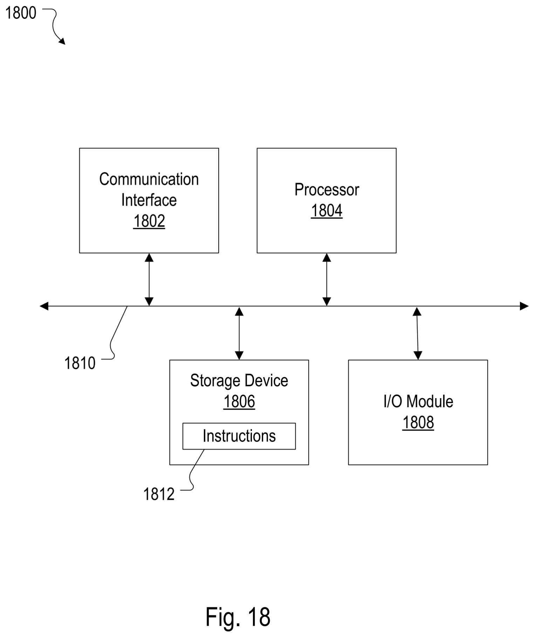

Fig. 18 shows an illustrative computing device 1800 that may be specifically configured to perform one or more of the operations, methods, and processes described herein. Any of the systems, computing devices, and/or other components described herein may be implemented by computing device 1800.

As shown in Fig. 18, computing device 1800 may include a communication interface 1802, a processor 1804, a storage device 1806, and an input/output ("I/O") module 1808 communicatively connected one to another via a communication infrastructure 1810. While an illustrative computing device 1800 is shown in Fig. 18, the components illustrated in Fig. 18 are not intended to be limiting. Additional or alternative components may be used in other embodiments. Components of computing device 1800 shown in Fig. 18 will now be described in additional detail.

Communication interface 1802 may be configured to communicate with one or more computing devices. Examples of communication interface 1802 include, without limitation, a wired network interface (such as a network interface card), a wireless network interface (such as a wireless network interface card), a modem, an audio/video connection, and any other suitable interface.

Processor 1804 generally represents any type or form of processing unit capable of processing data and/or interpreting, executing, and/or directing execution of one or more of the instructions, processes, and/or operations described herein. Processor 1804 may perform operations by executing computer-executable instructions 1812 (e.g., an application, software, code, and/or other executable data instance) stored in storage device 1806.

Storage device 1806 may include one or more data storage media, devices, or configurations and may employ any type, form, and combination of data storage media and/or device. For example, storage device 1806 may include, but is not limited to, any combination of the non-volatile media and/or volatile media described herein. Electronic data, including data described herein, may be temporarily and/or permanently stored in storage device 1806. For example, data representative of computer-executable instructions 1812 configured to direct processor 1804 to perform any of the operations described herein may be stored within storage device 1806. In some examples, data may be arranged in one or more databases residing within storage device 1806.

I/O module 1808 may include one or more I/O modules configured to receive user input and provide user output. One or more I/O modules may be used to receive input for a single virtual experience. I/O module 1808 may include any hardware, firmware, software, or combination thereof supportive of input and output capabilities. For example, I/O module 1808 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 1808 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 1808 is configured to provide graphical data to a display for presentation to a user. The graphical data may be representative of one or more graphical user interfaces and/or any other graphical content as may serve a particular implementation.

Advantages and features of the present disclosure can be further described by the following statements:

1. A system comprising: a memory storing instructions; and one or more processors communicatively coupled to the memory and configured to execute the instructions to perform a process comprising: determining that an ion guide is to operate in a select mode of two modes, the ion guide comprising a first end, a second end, and a series of electrodes disposed between the first end and the second end, the series of electrodes defining an ion occupation volume between the first end and the second end, wherein the two modes include a mass-to-charge ratio ($m/z$) separation mode configured to separate ions within the ion occupation volume primarily based on $m/z$ of the ions and an ion mobility separation mode configured to separate the ions within the ion occupation volume primarily based on a mobility of the ions; setting, based on the determining, an attribute of radio-frequency (RF) voltage waveforms that are to be applied to the series of electrodes to operate the ion guide in the select mode, wherein the setting comprises: setting the attribute of the RF voltage waveforms to be within a first range when the ion guide is to operate in the $m/z$ separation mode, and setting the attribute of the RF voltage waveforms to be within a second range when the ion guide is to operate in the ion mobility separation mode; and causing the RF voltage waveforms having the set attribute to be applied to the series of electrodes while the ion guide operates in the select mode, the RF voltage waveforms configured to cause spatial separation of the ions within the ion guide and to generate a plurality of moving pseudopotential wells that exert forces that urge the ions to migrate towards the second end of the ion guide.

2. The system of any of the proceeding statements, wherein the setting the attribute of the RF voltage waveforms includes setting one or more of a frequency of the RF voltage waveforms, a magnitude of the RF voltage waveforms, or a speed of the RF voltage waveforms.

3. The system of any of the proceeding statements, wherein the first range of the attribute of the RF voltage waveforms includes a first range of RF voltage waveform frequencies, wherein the second range of the attribute of the RF voltage waveforms includes a second range of RF voltage waveform frequencies that are lower than the first range of RF voltage waveform frequencies.

4. The system of any of the proceeding statements, wherein the ion guide includes a gas within the ion occupation volume at a gas pressure greater than or equal to 0.01 Torr.

5. The system of any of the proceeding statements, wherein the process further includes setting, based on the determining, the gas pressure of the gas within the ion occupation volume to operate the ion guide in the select mode, wherein the setting the gas pressure comprises: setting the gas pressure to be within a first pressure range when the ion guide is to operate in the $m/z$ separation mode, and setting the gas pressure to be within a second pressure range when the ion guide is to operate in the ion mobility separation mode.

6. The system of any of the proceeding statements, wherein the first pressure range includes gas pressures that are lower than gas pressures included in the second pressure range.

7. The system of any of the proceeding statements, wherein the process further comprises adjusting the attribute of the RF voltage waveforms to switch between the $m/z$ separation mode and the ion mobility separation mode.

8. The system of any of the proceeding statements, wherein the determining that the ion guide is to operate in the select mode is based on a user input designating the select mode.

9. The system of any of the proceeding statements, wherein the determining that the ion guide is to operate in the select mode is based on determining an attribute of a sample containing ions to be received by the ion guide.

10. The system of any of the proceeding statements, wherein the attribute of the sample includes multiple ions having a same $m/z$ range.

11. The system of any of the proceeding statements, wherein the process further includes causing, simultaneously with the application of the RF voltage waveforms, direct-current (DC) electrical potentials to be applied either to the series of electrodes or to a set of auxiliary electrodes that generate forces on the ions within the ion guide that are independent of $m/z$ and that urge the ions to migrate from the second end to the first end.

12. The system of any of the proceeding statements, wherein the applying of the DC electrical potentials comprises applying a set of two or more electrical potentials that urge the ions to migrate from the second end to the first end and that generate a static, uniform DC field within the ion guide, whereby ions having a particular $m/z$ are caused to accumulate within the ion guide and ions having other mass-to-charge ratios are caused to migrate out of the ion guide.

13. The system of any of the proceeding statements, wherein the process further includes ramping a magnitude of an applied DC electrical potential or an amplitude of an applied RF voltage waveform, whereby the accumulated ions having a particular $m/z$ are caused to migrate out of the ion guide through either the first or second end.

14. The system of any of the proceeding statements, wherein the applying of the RF voltage waveforms to the series of electrodes comprises: applying the RF voltage waveforms to a first series of electrodes disposed on a surface of a first substrate plate or wafer and to a second series of electrodes disposed on a surface of a second substrate plate or wafer, wherein the first substrate plate or wafer is substantially parallel to the second substrate plate or wafer and separated therefrom by a gap.

15. A mass spectrometer system comprising: an ion guide configured to receive ions and comprising: a first end; a second end; and a series of electrodes disposed between the first end and the second end, the series of electrodes defining an ion occupation volume between the first end and the second end; one or more power supplies electrically coupled to the series of electrodes, the one or more power supplies configured to apply a set of radio-frequency (RF) voltage waveforms to the series of electrodes; and a controller communicatively coupled with the one or more power supplies and configured to perform a process comprising: determining that the ion guide is to operate in a select mode of two modes, the two modes including a mass-to-charge ratio ($m/z$) separation mode configured to separate ions within the ion occupation volume primarily based on $m/z$ of the ions and an ion mobility separation mode configured to separate the ions primarily based on a mobility of the ions; setting, based on the determining, an attribute of radio-frequency (RF) voltage waveforms that are to be applied to the series of electrodes to operate the ion guide in the select mode, wherein the setting comprises: setting the attribute of the RF voltage waveforms to be within a first range when the ion guide is to operate in the $m/z$ separation mode, and setting the attribute of the RF voltage waveforms to be within a second range when the ion guide is to operate in the ion mobility separation mode; and causing the RF voltage waveforms having the set attribute to be applied to the series of electrodes while the ion guide operates in the select mode, the RF voltage waveforms configured to cause spatial separation of the ions within the ion guide and to generate a plurality of moving pseudopotential wells that exert forces that urge the ions to migrate towards the second end of the ion guide.

16. A method of operating an ion guide comprising a first end, a second end, and a series of electrodes disposed between the first end and the second end, the series of electrodes defining an ion occupation volume between the first end and the second end, the method comprising: determining that the ion guide is to operate in a select mode of two modes, the two modes including a mass-to-charge ratio ($m/z$) separation mode configured to separate ions within the ion occupation volume primarily based on $m/z$ of the ions and an ion mobility separation mode configured to separate the ions primarily based on a mobility of the ions; setting, based on the determining, an attribute of radio-frequency (RF) voltage waveforms that are to be applied to the series of electrodes to operate the ion guide in the select mode, wherein the setting comprises: setting the attribute of the RF voltage waveforms to be within a first range when the ion guide is to operate in the $m/z$ separation mode, and setting the attribute of the RF voltage waveforms to be within a second range when the ion guide is to operate in the ion mobility separation mode; and causing the RF voltage waveforms having the set attribute to be applied to the series of electrodes while the ion guide operates in the select mode, the RF voltage waveforms configured to cause spatial separation of the ions within the ion guide and to generate a plurality of moving pseudopotential wells that exert forces that urge the ions to migrate towards the second end of the ion guide.

17. The method of any of the proceeding statements, wherein the setting the attribute of the RF voltage waveforms includes setting one or more of a frequency of the RF voltage waveforms, a magnitude of the RF voltage waveforms, or a speed of the RF voltage waveforms.

18. The method of any of the proceeding statements, wherein the first range of the attribute of the RF voltage waveforms includes a first range of RF voltage waveform frequencies, wherein the second range of the attribute of the RF voltage waveforms includes a second range of RF voltage waveform frequencies that are lower than the first range of RF voltage waveform frequencies.

19. The method of any of the proceeding statements, further comprising setting, based on the determining, a gas pressure of a gas within the ion occupation volume to operate the ion guide in the select mode, wherein the setting the gas pressure comprises: setting the gas pressure to be within a first pressure range when the ion guide is to operate in the $m/z$ separation mode, and setting the gas pressure to be within a second pressure range when the ion guide is to operate in the ion mobility separation mode.

20. The method of any of the proceeding statements, further comprising adjusting the attribute of the RF voltage waveforms to switch between the $m/z$ separation mode and the ion mobility separation mode.

In the preceding description, various exemplary embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

**Claims**

1. A system comprising:

   a memory storing instructions; and
   one or more processors communicatively coupled to the memory and configured to execute the instructions to perform a process comprising:

   determining that an ion guide is to operate in a select mode of two modes, the ion guide comprising a first end, a second end, and a series of electrodes disposed between the first end and the second end, the series of electrodes defining an ion occupation volume between the first end and the second end, wherein the two modes include a mass-to-charge ratio ($m/z$) separation mode configured to separate ions within the ion occupation volume primarily based on $m/z$ of the ions and an ion mobility separation mode configured to separate the ions within the ion occupation volume primarily based on a mobility of the ions;
   setting, based on the determining, an attribute of radio-frequency (RF) voltage waveforms that are to be applied to the series of electrodes to operate the ion guide in the select mode, wherein the setting comprises:

   setting the attribute of the RF voltage waveforms to be within a first range when the ion guide is to operate in the $m/z$ separation mode, and
   setting the attribute of the RF voltage waveforms to be within a second range when the ion guide is to operate in the ion mobility separation mode; and

   causing the RF voltage waveforms having the set attribute to be applied to the series of electrodes while the ion guide operates in the select mode, the RF voltage waveforms configured to cause spatial separation of the ions within the ion guide and to generate a plurality of moving pseudopotential wells that exert forces that urge the ions to migrate towards the second end of the ion guide.

2. The system of claim 1, wherein the setting the attribute of the RF voltage waveforms includes setting one or more of a frequency of the RF voltage waveforms, a magnitude of the RF voltage waveforms, or a speed of the RF voltage waveforms.

3. The system of any one of claims 1-2, wherein the first range of the attribute of the RF voltage waveforms includes a first range of RF voltage waveform frequencies, wherein the second range of the attribute of the RF voltage waveforms includes a second range of RF voltage waveform frequencies that are lower than the first range of RF voltage waveform frequencies.

4. The system of any one of claims 1-3, wherein the ion guide includes a gas within the ion occupation volume at a gas pressure greater than or equal to 0.01 Torr.

5. The system of claim 4, wherein the process further includes setting, based on the determining, the gas pressure of the gas within the ion occupation volume to operate the ion guide in the select mode, wherein the setting the gas pressure comprises:

   setting the gas pressure to be within a first pressure range when the ion guide is to operate in the $m/z$ separation mode, and
   setting the gas pressure to be within a second pressure range when the ion guide is to operate in the ion mobility separation mode,
   optionally wherein the first pressure range includes gas pressures that are lower than gas pressures included in the second pressure range.

6. The system of any one of claims 1-5, wherein the process further comprises adjusting the attribute of the RF voltage waveforms to switch between the *m/z* separation mode and the ion mobility separation mode.

7. The system of any one of claims 1-6, wherein the determining that the ion guide is to operate in the select mode is based on a user input designating the select mode.

8. The system of any one of claims 1-7, wherein the determining that the ion guide is to operate in the select mode is based on determining an attribute of a sample containing ions to be received by the ion guide,
optionally wherein the attribute of the sample includes multiple ions having a same *m/z* range.

9. The system of any one of claims 1-8, wherein the process further includes causing, simultaneously with the application of the RF voltage waveforms, direct-current (DC) electrical potentials to be applied either to the series of electrodes or to a set of auxiliary electrodes that generate forces on the ions within the ion guide that are independent of *m/z* and that urge the ions to migrate from the second end to the first end, and

optionally wherein the applying of the DC electrical potentials comprises applying a set of two or more electrical potentials, one of the electrical potentials generating a static, uniform DC field within a portion of the ion guide, whereby ions having a particular *m/z* are caused to accumulate within the ion guide and ions having other mass-to-charge ratios are caused to migrate out of the ion guide, and
further optionally wherein the process further includes ramping a magnitude of an applied DC electrical potential or an amplitude of an applied RF voltage waveform, whereby the accumulated ions having a particular *m/z* are caused to migrate out of the ion guide through either the first or second end.

10. The system of any one of claims 1-9, wherein the applying of the RF voltage waveforms to the series of electrodes comprises: applying the RF voltage waveforms to a first series of electrodes disposed on a surface of a first substrate plate or wafer and to a second series of electrodes disposed on a surface of a second substrate plate or wafer, wherein the first substrate plate or wafer is substantially parallel to the second substrate plate or wafer and separated therefrom by a gap.

11. A method of operating an ion guide comprising a first end, a second end, and a series of electrodes disposed between the first end and the second end, the series of electrodes defining an ion occupation volume between the first end and the second end, the method comprising:

determining that the ion guide is to operate in a select mode of two modes, the two modes including a mass-to-charge ratio (*m/z*) separation mode configured to separate ions within the ion occupation volume primarily based on *m/z* of the ions and an ion mobility separation mode configured to separate the ions primarily based on a mobility of the ions;
setting, based on the determining, an attribute of radio-frequency (RF) voltage waveforms that are to be applied to the series of electrodes to operate the ion guide in the select mode, wherein the setting comprises:

setting the attribute of the RF voltage waveforms to be within a first range when the ion guide is to operate in the *m/z* separation mode, and
setting the attribute of the RF voltage waveforms to be within a second range when the ion guide is to operate in the ion mobility separation mode; and

causing the RF voltage waveforms having the set attribute to be applied to the series of electrodes while the ion guide operates in the select mode, the RF voltage waveforms configured to cause spatial separation of the ions within the ion guide and to generate a plurality of moving pseudopotential wells that exert forces that urge the ions to migrate towards the second end of the ion guide.

12. The method of claim 11, wherein the setting the attribute of the RF voltage waveforms includes setting one or more of a frequency of the RF voltage waveforms, a magnitude of the RF voltage waveforms, or a speed of the RF voltage waveforms.

13. The method of any one of claims 11-12, wherein the first range of the attribute of the RF voltage waveforms includes a first range of RF voltage waveform frequencies, wherein the second range of the attribute of the RF voltage waveforms includes a second range of RF voltage waveform frequencies that are lower than the first range of RF voltage waveform frequencies.

14. The method of any one of claims 1-13, further comprising setting, based on the determining, a gas pressure of a gas within the ion occupation volume to operate the ion guide in the select mode, wherein the setting the gas pressure comprises:

setting the gas pressure to be within a first pressure range when the ion guide is to operate in the $m/z$ separation mode, and
setting the gas pressure to be within a second pressure range when the ion guide is to operate in the ion mobility separation mode.

15. The method of any one of claims 1-14, further comprising adjusting the attribute of the RF voltage waveforms to switch between the $m/z$ separation mode and the ion mobility separation mode.

Fig. 1A
(Prior Art)

EP 4 742 299 A1

Fig. 1B
(Prior Art)

Fig. 1C
(Prior Art)

52a

7a 7b 7c 7d 7e 7f 7g 7h 7i 7j 7k 7m

57

53

52b

Fig. 1D
(Prior Art)

Fig. 2A

EP 4 742 299 A1

Fig. 2B

Fig. 2C

EP 4 742 299 A1

218

119

117c

117b

201

117a

213

200

2

pseudo-waves

210

211

DC axial field

Fig. 3A

Fig. 3B

Fig. 4A

EP 4 742 299 A1

RF Gradient

350

351

352

353

354

355

356

Number of Ions

Equilibrium Position (mm)

0    20    40    60    80    100

Fig. 4B

Fig. 5

Fig. 6A

EP 4 742 299 A1

113

118

608

pseudo-waves - - - - ->

$\overleftarrow{\vec{E_1}}$

$|\vec{E}|$

0          position →          L

Fig. 6B

113

118

612

$|V|$

0          position →          L

Fig. 6C

EP 4 742 299 A1

Fig. 6D

Fig. 6E

EP 4 742 299 A1

Fig. 6F

Fig. 6G

Fig. 6H

Fig. 7A

Fig. 7B

Fig. 8

Fig. 9

<u>800</u>

Input pulse of ions comprising a range of mass-to-charge values to an ion guide having a first ion port, a second ion port and a plurality of electrodes between the first and second ion ports — 801

Temporarily trap and/or accumulate ions at an end of the ion guide adjacent to first port — 802

Apply radio-frequency (RF) voltage waveforms to series of electrodes that generate a plurality of pseudopotential wells that are configured to urge the ions in a first direction, either away from or towards the first ion port — 803

Simultaneously, apply a respective DC electrical potential to each of two or more electrodes that generate a DC field that is configured to urges ions in the opposite direction from the urging of the ions by the RF voltage waveforms — 805

Progressively ramp applied RF amplitude and/or one or more applied DC potentials — 807

Extract ions comprising a reduced range of mass-to-charge ratios from ion guide through one or both ion ports — 809

Fig. 10A

<u>810</u>

```
┌──────────────────────────────────────────┐
│ Apply radio-frequency (RF) voltage        │ 811
│ waveforms to a series of electrodes        │
│ disposed between an ion inlet and an       │
│ ion outlet of an ion guide, wherein the    │
│ RF voltage waveforms generate a            │
│ plurality of pseudopotential wells that    │
│ are configured to urge ions away from      │
│ the ion inlet and towards the ion outlet   │
└──────────────────────────────────────────┘
                    │
                    ▼
┌──────────────────────────────────────────┐
│ Simultaneously, apply a respective DC      │ 813
│ electrical potential to each of two or     │
│ more of the electrodes that generate a     │
│ DC field that is configured to urge ions   │
│ away from the ion outlet and towards       │
│ the ion inlet                              │
└──────────────────────────────────────────┘
                    │
                    ▼
┌──────────────────────────────────────────┐
│ Inlet pulse of ions comprising a           │ 815
│ range of mass-to-charge values to          │
│ the ion guide through the ion inlet        │
└──────────────────────────────────────────┘
                    │
                    ▼
┌──────────────────────────────────────────┐
│ Progressively, either: (a) increase        │ 817
│ applied RF amplitude and/or (b) decrease   │
│ DC field strength by changing applied      │
│ DC potentials                              │
└──────────────────────────────────────────┘
                    │
                    ▼
┌──────────────────────────────────────────┐
│ Extract ions from ion outlet in            │ 819
│ increasing order of their mass-to-charge   │
│ ratios                                     │
└──────────────────────────────────────────┘
```

Fig. 10B

<u>830</u>

Apply radio-frequency (RF) voltage waveforms to a plurality of electrodes of an ion funnel having an ion inlet end, an ion outlet end and a plurality of plate or ring electrodes between the inlet and outlet ends that have respective apertures that decrease in diameter from the inlet end to the outlet end, wherein the RF voltage waveforms generate a plurality of pseudopotential wells that are configured to urge ions towards the ion inlet and away from towards the ion outlet — 831

Simultaneously, apply a respective DC electrical potential to each electrode, whereby the applied DC potentials generate a DC field that is configured to urge ions from the inlet end to the outlet end — 833

Inlet pulse of ions comprising a range of mass-to-charge values to the ion funnel through the ion inlet end — 835

Progressively increase DC field strength by ramping applied DC potentials — 837

Extract ions from outlet end in decreasing order of their *m/z* ratios — 839

Fig. 10C

Fig. 11A

Fig. 11B

1200

Ion Guide
1202

1216

1214

1210-1

1210-2

1212-1

1212-n

RF Voltage
Waveforms

DC
Voltages

Gas
Pressure

Power Source
1204

Pressure
Controller
1208

Controller
1206

Fig. 12

Controller
1206

Storage Facility
1302

Instructions
1306

Processing Facility
1304

Fig. 13

1400

Determine that an ion guide is to operate in a select mode of two modes, wherein the two modes include a mass-to-charge ratio (m/z) separation mode configured to separate ions primarily based on m/z of the ions and an ion mobility separation mode configured to separate the ions primarily based on a mobility of the ions
1402

Set, based on the determining, an attribute of radio-frequency (RF) voltage waveforms that are to be applied to a series of electrodes to operate the ion guide in the select mode
1404

Cause the RF voltage waveforms having the set attribute to be applied to the series of electrodes while the ion guide operates in the select mode, the RF voltage waveforms configured to cause spatial separation of the ions within the ion guide and to generate a plurality of moving pseudopotential wells that exert forces that urge the ions to migrate towards the second end of the ion guide
1406

Fig. 14

1500

Receive a user input and/or data representative of an attribute of a sample
1502

1504

m/z separation mode?

yes

no

Set an attribute of the RF voltage waveforms to be within a first range
1506

Set an attribute of the RF voltage waveforms to be within a second range
1508

Cause the RF voltage waveforms having the set attribute to be applied to the series of electrodes while the ion guide operates in the select mode
1510

Fig. 15

1600

Receive a user input and/or data representative of an attribute of a sample
1602

1604

m/z separation mode?

yes

no

Set an attribute of gas within the ion guide to be within a first range
1606

Set an attribute of gas within the ion guide to be within a second range
1608

Cause gas having the set attribute to be applied to within an ion occupation volume while the ion guide operates in the select mode
1610

Fig. 16

Fig. 17A

Fig. 17B

1800

Communication
Interface
1802

Processor
1804

1810

Storage Device
1806

Instructions

1812

I/O Module
1808

Fig. 18

# EUROPEAN SEARCH REPORT

**Application Number**

EP 25 21 3938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 536 721 B2 (BERDNIKOV ALEXANDER [RU] ET AL) 3 January 2017 (2017-01-03) * column 9, line 64 - column 10, line 16; claims 1, 8 * | 1-15 | INV. H01J49/42 G01N27/622 |
| X | US 9 799 503 B2 (AGILENT TECHNOLOGIES INC [US]) 24 October 2017 (2017-10-24) * claim 1; figures 1,7,8 * * column 6, line 31 - line 58 * * column 7, line 3 - line 22 * * column 9, line 3 - line 22 * * column 10, line 30 - line 42 * | 1-15 | |
| A | EP 2 747 124 A1 (MICROMASS LTD [GB]) 25 June 2014 (2014-06-25) * paragraph [0034] * | 1-15 | |
| A | GB 2 555 247 A (MICROMASS LTD [GB]) 25 April 2018 (2018-04-25) * claim 11 * | 1-15 | |
| A | GB 2 525 275 A (MICROMASS LTD [GB]) 21 October 2015 (2015-10-21) * claim 20 * | 1-15 | TECHNICAL FIELDS SEARCHED (IPC) H01J G01N |

The present search report has been drawn up for all claims

| Place of search | Date of completion of the search | Examiner |
|---|---|---|
| The Hague | 6 March 2026 | Peters, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 3938

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2026

| Patent document cited in search report | | Publication date | Patent family member(s) | | Publication date |
|---|---|---|---|---|---|
| US 9536721 | B2 | 03-01-2017 | CN | 103718270 A | 09-04-2014 |
| | | | CN | 107611001 A | 19-01-2018 |
| | | | CN | 107633995 A | 26-01-2018 |
| | | | CN | 107658203 A | 02-02-2018 |
| | | | US | 2014061457 A1 | 06-03-2014 |
| | | | US | 2017140911 A1 | 18-05-2017 |
| | | | US | 2018005811 A1 | 04-01-2018 |
| | | | US | 2019122875 A1 | 25-04-2019 |
| | | | US | 2019371587 A1 | 05-12-2019 |
| | | | WO | 2012150351 A1 | 08-11-2012 |
| US 9799503 | B2 | 24-10-2017 | CN | 105810550 A | 27-07-2016 |
| | | | EP | 3048636 A1 | 27-07-2016 |
| | | | US | 2016211128 A1 | 21-07-2016 |
| EP 2747124 | A1 | 25-06-2014 | CA | 2672525 A1 | 19-06-2008 |
| | | | EP | 2092548 A2 | 26-08-2009 |
| | | | EP | 2747124 A1 | 25-06-2014 |
| | | | GB | 2451149 A | 21-01-2009 |
| | | | JP | 5198467 B2 | 15-05-2013 |
| | | | JP | 2010512633 A | 22-04-2010 |
| | | | US | 2010032561 A1 | 11-02-2010 |
| | | | US | 2013234016 A1 | 12-09-2013 |
| | | | US | 2014145074 A1 | 29-05-2014 |
| | | | WO | 2008071967 A2 | 19-06-2008 |
| GB 2555247 | A | 25-04-2018 | GB | 2555247 A | 25-04-2018 |
| | | | US | 2019237319 A1 | 01-08-2019 |
| | | | US | 2023343575 A1 | 26-10-2023 |
| | | | WO | 2018073594 A1 | 26-04-2018 |
| GB 2525275 | A | 21-10-2015 | GB | 2525275 A | 21-10-2015 |
| | | | GB | 2557524 A | 20-06-2018 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6630662 B
- US 7838826 B1
- US 11226308 B
- US 6812453 B
- US 9799503 B
- US 10692710 B

- US 7675031 B, Konicek
- US 5847386 A, Thomson
- US 7985951 B, Okumura
- US 7064322 B, Crawford
- US 6417511 B, Russ, IV

**Non-patent literature cited in the description**

- **KANU, ABU B** ; **PRABHA DWIVEDI** ; **MAGGIE TAM** ; **LAURA MATZ** ; **HERBERT H. HILL JR**. Ion mobility-mass spectrometry. *ournal of mass spectrometry*, 2008, vol. 43 (1), 1-22
- **MICHELMANN, KARSTEN** ; **JOSHUA A. SILVEIRA** ; **MARK E. RIDGEWAY** ; **MELVIN A. PARK**. Fundamentals of trapped ion mobility spectrometry.. *Journal of the American Society for Mass Spectrometry*, 2014, vol. 26 (1), 14-24
- **SILVEIRA, JOSHUA A.** ; **KARSTEN MICHELMANN** ; **MARK E. RIDGEWAY** ; **MELVIN A. PARK**. Fundamentals of trapped ion mobility spectrometry part II: fluid dynamics.. *Journal of the American Society for Mass Spectrometry*, 2016, vol. 27 (4), 585-595

- **TOLMACHEV, ALEKSEY V** ; **IAN K. WEBB** ; **YEHIA M. IBRAHIM** ; **SANDILYA VB GARIMELLA** ; **XINYU ZHANG** ; **GORDON A. ANDERSON** ; **RICHARD D. SMITH**. Characterization of ion dynamics in structures for lossless ion manipulations.. *Analytical chemistry*, 2014, vol. 86 (18), 9162-9168
- **IBRAHIM, YEHIA M** ; **AHMED M. HAMID** ; **LIULIN DENG** ; **SANDILYA VB GARIMELLA** ; **IAN K. WEBB** ; **ERIN S. BAKER** ; **RICHARD D. SMITH**. New frontiers for mass spectrometry based upon structures for lossless ion manipulations. *Analyst*, 2017, vol. 142 (7), 1010-1021